# EUROPÄISCHE PATENTSCHRIFT

(11) **EP 3 478 418 B1**
(45) Veröffentlichungstag und Bekanntmachung des Hinweises auf die Patenterteilung: **15.11.2023**
(21) Anmeldenummer: 17734086.6
(22) Anmeldetag: 29.06.2017
(51) Int. Cl.: B01L 3/02, G01N 35/10

(54) **DOSIERKOPF, DOSIERVORRICHTUNG UMFASSEND EINEN DOSIERKOPF UND VERFAHREN ZUM DOSIEREN MITTELS EINES DOSIERKOPFES**
METERING HEAD, METERING DEVICE COMPRISING A METERING HEAD, AND METHOD FOR METERING BY MEANS OF A METERING HEAD
TÊTE DE DOSAGE, DISPOSITIF DE DOSAGE COMPRENANT UNE TÊTE DE DOSAGE ET PROCÉDÉ DE DOSAGE AU MOYEN D'UNE TÊTE DE DOSAGE

(30) Priorität: 29.06.2016 DE 102016111910
(43) Veröffentlichungstag der Anmeldung: 08.05.2019
(73) Patentinhaber: Eppendorf SE, 22339 Hamburg (DE)
(72) Erfinder: WILMER, Jens, 22926 Ahrensburg (DE)
(74) Vertreter: Hauck Patentanwaltspartnerschaft mbB
(86) Internationale Anmeldenummer: PCT/EP2017/066190
(87) Internationale Veröffentlichungsnummer: WO 2018/002254

(56) Entgegenhaltungen:
- WO-A1-2007/022667
- DE-U1-202011 000 837
- JP-A- H06 320 021
- JP-A- 2012 247 201
- US-A1- 2008 138 249

## Beschreibung

Die Erfindung bezieht sich auf einen Dosierkopf zum gleichzeitigen Aufnehmen einer Vielzahl Pipettenspitzen, auf eine Dosiervorrichtung umfassend einen Dosierkopf zum gleichzeitigen Aufnehmen einer Vielzahl Pipettenspitzen und auf ein Verfahren zum Dosieren von Flüssigkeiten mittels eines Dosierkopfes zum gleichzeitigen Aufnehmen einer Vielzahl Pipettenspitzen.

Dosiervorrichtungen ("Pipettiervorrichtungen") mit einem Dosierkopf ("Pipettierkopf") zum gleichzeitigen Aufnehmen einer Vielzahl Pipettenspitzen werden insbesondere in medizinischen, biologischen, biochemischen und chemischen Laboratorien zur Dosierung von Flüssigkeiten verwendet.

Dosierköpfe zum gleichzeitigen Aufnehmen einer Vielzahl Pipettenspitzen haben eine Vielzahl nebeneinander angeordneter, paralleler Ansätze, die in Aufstecköffnungen am oberen Ende der Pipettenspitzen eingesetzt werden. Durch eine Spitzenöffnung am unteren Ende der Pipettenspitzen hindurch wird Flüssigkeit in die Pipettenspitzen aufgenommen und aus diesen ausgegeben.

Nach Gebrauch können die Pipettenspitzen von den Ansätzen gelöst und gegen frische Pipettenspitzen ausgetauscht werden. Hierdurch werden bei nachfolgenden Dosierungen Kontaminationen vermieden. Pipettenspitzen aus Kunststoff für den einmaligen Gebrauch sind kostengünstig verfügbar.

Bei der Ausführung als Luftpolsterpipettiervorrichtung ist mindestens eine Verdrängungseinrichtung für Luft in die Pipettiervorrichtung integriert und über Verbindungslöcher der Ansätze kommunizierend mit den Pipettenspitzen verbunden. Mittels der Verdrängungseinrichtung ist ein Luftpolster verlagerbar, sodass Flüssigkeit in die Pipettenspitzen eingesogen und daraus ausgestoßen wird. Die Verdrängungseinrichtungen sind meistens Zylinder mit darin verschieblichen Kolben. Bekannt sind aber auch Verdrängungseinrichtungen mit einer Verdrängungskammer und mindestens einer verformbaren Wand, wobei eine Verformung der Wand die Verdrängung des Luftpolsters bewirkt.

Bei der Ausführung als Direktverdrängerpipettiervorrichtung ist in der Pipettenspitze ein kleiner Kolben angeordnet, der beim Aufstecken der Pipettenspitze auf den Ansatz mit einem Kolbenantrieb der Pipettiervorrichtung gekoppelt wird.

Die Aufnahme der Flüssigkeit erfolgt bevorzugt in einem einzigen Schritt oder in mehreren kleinen Schritten. Die Abgabe der Flüssigkeit erfolgt beim Pipettieren in einem einzigen Schritt und beim Dispensieren in mehreren kleinen Schritten.

Die Dosiervorrichtungen können als manuell oder elektromotorisch angetriebene, handhabbare Mehrkanalpipetten ausgebildet sein, die vom Anwender beim Dosieren in der Hand gehalten werden ("Handpipetten").

Bei Dosierstationen ("Pipettierstationen") oder Dosierautomaten ("Pipettierautomaten") ist der Dosierkopf an einem Roboterarm oder einem anderen Übertragungssystem zum Verlagern des Dosierkopfes oberhalb einer Arbeitsfläche verlagerbar. Dosierstationen oder Dosierautomaten können mit dem Dosierkopf frische Pipettenspitzen aus einem Halter aufnehmen, mit den Pipettenspitzen Flüssigkeiten aus Gefäßen aufnehmen und in Gefäße abgeben und gebrauchte Pipettenspitzen in einen Abfallbehälter abwerfen. Dosierstationen oder Dosierautomaten können Bestandteil von Laborautomaten ("Workstations") sein, die außer dem Dosieren von Flüssigkeiten weitere Behandlungen von Flüssigkeiten durchführen können. Hierzu gehören insbesondere das Mischen, Temperieren und andere physikalische Behandlungen, die chemische oder biochemische Umsetzung und die Analyse von Proben.

Die Ansätze zum Halten von Pipettenspitzen sind vielfach als konischer, zylindrischer oder teils konischer und teils zylindrischer Vorsprung bezüglich eines Gehäuses oder eines anderen Trägers der Dosiervorrichtung ausgebildet. Die Pipettenspitzen sind mit einem Dichtsitz neben einer Aufstecköffnung an ihrem oberen Ende auf die Ansätze aufklemmbar. Hierfür werden die Ansätze in die Aufstecköffnungen der in einem Halter bereitstehenden Pipettenspitzen eingedrückt, sodass sich die Pipettenspitzen etwas aufweiten und unter Vorspannung auf den Ansätzen festsitzen. Die für das Aufklemmen aufzubringende Kraft steigt mit der Anzahl der Pipettenspitzen an.

Zum Lösen der aufgeklemmten Pipettenspitzen von den Ansätzen weisen die Pipettiervorrichtungen eine Abwurfeinrichtung mit einer Antriebseinrichtung und einem Abwerfer auf. Durch Betätigen der Antriebseinrichtung wird der Abwerfer so verlagert, dass er die Pipettenspitzen von den Ansätzen löst. Die Antriebseinrichtung wird entweder manuell oder von einem Elektromotor angetrieben. Die Abwurfkraft für das Lösen aufgeklemmter Pipettenspitzen von den Ansätzen steigt mit der Anzahl der Pipettenspitzen an.

Für das Aufklemmen von Pipettenspitzen auf 8, 12, 16, 24, 96 oder 384 Ansätze und Abwerfen der Pipettenspitzen von den Ansätzen sind hohe Kräfte aufzubringen.

Die DE 10 2004 003 433 B4 beschreibt eine Mehrkanalpipette, bei der der Kraftaufwand für das Aufklemmen der Pipettenspitzen auf den Ansätzen und das Lösen der Pipettenspitzen von den Ansätzen dadurch vermindert wird, dass die Ansätze verfedert sind und in axialer Richtung über einen durch den Abwerfer gebildeten Anschlag hinausstehen. Übersteigt beim Aufklemmen von Pipettenspitzen die Auf klemmkraft einen bestimmten Wert, so federn die Ansätze ein, bis die Pipettenspitzen am Abwerfer anliegen. Hierdurch wird die Aufklemmkraft auf einen Wert begrenzt, bei dem die Pipettenspitzen abdichtend auf den Ansätzen gehalten sind. Dementsprechend ist auch die Abwurfkraft begrenzt.

Die EP 2 735 369 A1 beschreibt eine Mehrkanalpipette, bei der die Abwurfkräfte weiter dadurch reduziert werden, dass der Abwerfer mehrere Kontaktelemente aufweist, die nacheinander auf die Pipettenspitzen treffen, um diese von den Ansätzen abzudrücken.

Die WO 01/56695 A1 beschreibt einen Pipettierkopf mit 96 Kanälen, wobei die Ansätze am unteren Ende einen größeren Konuswinkel als darüber aufweisen, um die Kraft zum Aufstecken von Pipettenspitzen mit einem Kragen größerer Wandstärke am oberen Ende und einer geringeren Wandstärke unterhalb des Kragens zu verringern. Der Pipettierkopf umfasst eine Anschlagplatte zum Abwerfen der Pipettenspitzen von den Ansätzen. Die Anschlagplatte ist abgestuft, um die Pipettenspitzen nacheinander von den Ansätzen abzudrücken und die Abwurfkraft zu reduzieren.

Von der Anschlagplatte stehen Pfosten mit Vorspanneinrichtungen vor. Eine Kolbenplatte, die Kolben in Zylindern verlagert, die mit den Ansätzen verbunden sind, trifft beim Zurückziehen auf die Vorspanneinrichtungen, um das Abwerfen der Pipettenspitzen von den Ansätzen durch die Anschlagplatte auszulösen. Die Konstruktion mit Vorspanneinrichtungen zum Abwerfen von Pipettenspitzen ist auf wendig.

Die WO 2005/113149 A1 beschreibt eine Vorrichtung zur Aufnahme und Abgabe von Flüssigkeiten mit einem Pipettierkopf, der 96 Ansätze für Pipettenspitzen aufweist. 96 Kolben-Zylinder-Einheiten sind mit den Ansätzen verbunden und mittels einer Antriebsmechanik von Hand betätigbar. Der Pipettierkopf ist entlang einer Vertikalführung verschiebbar, um Pipettenspitzen von einem Pipettenspitzenträger aufzunehmen und Flüssigkeit einzusaugen und abzugeben. Der Pipettierkopf ist mittels eines Übersetzungshebels mit verstärkter Kraft nach unten drückbar, um den erforderlichen Kraftaufwand für das Aufnehmen von 96 Pipettenspitzen aufzubringen. Die Ansätze sind durch Löcher einer Lochplatte hindurchgeführt, die vertikal verlagerbar ist, um die Pipettenspitzen von den Ansätzen abzustreifen.

Die DE 20 2008 013 533 U1 beschreibt eine Pipettiervorrichtung mit einer Basisplatte und einer diese außen seitlich abdeckenden, elastischen Dichtplatte, wobei durch die Basisplatte und die Dichtplatte eine Vielzahl von in einem vorgegebenen Raster angeordneten Pipettierkanälen hindurchgeführt sind. Ein im gleichen Raster mit Pipettenspitzen, die jeweils einen Bund aufweisen, bestücktes Magazin steht in einer Magazinaufnahme liegend mittelbar über die Bünde und die Dichtplatte mit der Basisplatte kraftschlüssig in Verbindung. Die Magazinaufnahme ist von einem Magazinrahmen gebildet, der über ein Exzentergetriebe von einem Antriebsmotor angehoben und abgesenkt werden kann, um die Pipettenspitzen in abdichtende Anlage an der Dichtplatte zu bringen oder von der Dichtplatte zu lösen.

Pipettierautomaten, bei denen Pipettenspitzen in einem Magazin in einer Magazinaufnahme aufgenommen und an eine Dichtplatte angepresst werden, werden von der Firma Apricot Designs, Inc, Covina, CA, USA, unter den Produktbezeichnungen "i-Pipette" und "i-Pipette Pro" vermarktet.

Nachteilig ist, dass diese Pipettierautomaten nur mit speziellen Pipettenspitzen in einem speziellen Magazin zusammenarbeiten können. Ferner ist nachteilig, dass die Bestückung der Magazinaufnahme von Hand erfolgt.

Die EP 0 737 726 A2 beschreibt eine Vorrichtung zum gleichzeitigen Aufnehmen mehrerer Pipettenspitzen mittels paralleler Ansätze in einer gerade Reihe, die jeweils in einer Ringnut mit einer einstellbaren Nutenbreite einen elastomeren O-Ring aufweisen. Die Ausdehnung der O-Ringe in Umfangsrichtung ist durch Verstellen der Nutenbreiten veränderbar, um die Pipettenspitzen abdichtend auf den Ansätzen festzuklemmen und die Pipettenspitzen von den Ansätzen zu lösen. Zum Einstellen der Nutenbreiten sind die Nuten jeweils durch eine auf den Ansatz geschraubte Gewindehülse begrenzt, die mittels eines angekoppelten Getriebemechanismus auf dem Ansatz drehbar ist. Jede Gewindehülse ist fest mit einem Zahnrad verbunden. Die Zahnräder kämmen mit einer einzigen Zahnstange, die von einem drehbaren Handgriff angetrieben ist. Bei einer alternativen Ausführungsart ist jede einzelne Gewindehülse individuell von einem Elektromotor angetrieben und sind die Elektromotoren für einen gleichlaufenden Betrieb mit einer gemeinsamen Spannungsversorgung verbunden. Unterhalb der Ansätze ist eine Führungsplatte mit einer Reihe von Einkerbungen vorhanden, um beim Absenken der Vorrichtung die Pipettenspitzen auf die Ansätze auszurichten. Der Antrieb zum Festklemmen der Pipettenspitzen auf den Ansätzen ist konstruktiv aufwendig. Die Einkerbungen hindern die Pipettenspitzen nicht an einem Kippen auf den Ansätzen. Somit ist die Vorrichtung nur zum gleichzeitigen Aufnehmen einer geringen Anzahl nicht allzu eng nebeneinander angeordneter Pipettenspitzen geeignet. Das Ausführungsbeispiel hat vier Ansätze zum gleichzeitigen Aufnehmen von vier Pipettenspitzen.

Die DE 199 17 375 C2 beschreibt eine Pipettiereinheit mit einer Pipettenspitze und einem Ansatz, der ein Pipettierrohr mit einer Koppelhülse am unteren Ende, einen auf das Pipettierrohr aufgeschobenen O-Ring aus elastisch verformbarem Material und eine auf das Pipettierrohr aufgeschobene Hülse aufweist. Die Hülse dient zur axialen Quetschung des O-Ringes, sodass sich dieser radial verformt und abdichtend in eine Ringnut am Innenumfang der Pipettenspitze eingreift. Zum Lösen der Pipettenspitze kann der O-Ring entlastet werden. Zum Halten der Pipettenspitze auf dem Ansatz in einer vorbestimmten Stellung weisen Ansatz und Pipettenspitze zusammenwirkende Axialpositionierungsmittel auf. Dadurch, dass der O-Ring in eine Ringnut der Pipettenspitze eingreift, werden die aneinander anliegenden Axialpositionierungsmittel vorgespannt. Zum Abwerfen der Pipettenspitze ist ein beweglicher Abwerfer vorgesehen, der als die Hülse umschließendes Abwerferrohr ausgebildet ist. Der Abwerfer ist hydraulisch oder elektromotorisch betätigbar oder mittels einer Vorspannfeder, die beim Aufsetzen der Pipettenspitze auf die Pipettiereinheit gespannt wird. Die Betätigungsmittel zum Festklemmen und Lösen der Pipettenspitze am Ansatz sind aufwendig und haben einen hohen Platzbedarf. Das Anbringen der Pipettenspitzen in der definierten Kopplungsstellung kann leicht durch Fertigungstoleranzen oder eine ungenaue Positionierung der Pipettenspitze auf dem Ansatz verhindert werden. Die Ringnut und die Axialpositionierungsmittel schränken den Einsatz verschiedener Pipettenspitzen ein.

Die US 2008/0138249 A1 beschreibt eine Dosiervorrichtung mit mehreren Dosiereinheiten, die um eine gemeinsame Drehachse herum angeordnet sind. Die Dosiereinheiten können um die Drehachse in verschiedene Positionen gedreht werden, in denen eine Dosiereinheit eine Pipettenspitze aufnimmt, eine weitere Dosiereinheit eine Probe aufnimmt, eine weitere Dosiereinheit eine Probe abgibt und eine weitere Dosiereinheit eine Pipettenspitze abwirft. Jede Dosiereinheit weist einen Ansatz mit Silikonkugeln auf, die durch Verlagerung eines Flansches elastisch komprimiert werden können, sodass sie am Innenumfang eines Zylinderabschnittes einer Pipettenspitze festklemmen. Die Dosiereinheiten werden unabhängig voneinander gesteuert, um in verschiedenen Positionen die verschiedenen Operationen durchzuführen.

Die WO 2007/022667 A1 beschreibt eine automatische Mehrkanalpipette, bei der mehrere Pipettenspitzen auf nebeneinander angeordnete Ansätze aufgeklemmt werden. Die Ansätze sind durch Löcher einer Lochplatte hindurchgeführt, die zum Abstreifen der aufgeklemmten Pipettenspitzen von den Ansätzen gegen das obere Ende der aufgeklemmten Pipettenspitzen drückbar ist.

Die DE 20 2011 000 837 U1 beschreibt eine Pipettiervorrichtung, die eine Basisplatte mit einer Dichtplatte an der Unterseite und Schwenkklauen an den seitlichen Rändern der Basisplatte aufweist. Ein plattenförmiges Magazin mit einer Vielzahl Löcher, in die Pipettenspitzen von oben eingesetzt sind, sodass sie sich jeweils mit einem Spitzenbund an der Oberseite des Magazins abstützen, wird von den Schwenkklauen gegen die Dichtplatte an der Unterseite der Basisplatte gepresst.

Davon ausgehend liegt der Erfindung die Aufgabe zugrunde, einen Dosierkopf mit einer großen Anzahl Ansätze, insbesondere 8, 12, 16, 24, 96 oder 384 Ansätze, zum gleichzeitigen Aufnehmen einer großen Anzahl Pipettenspitzen zur Verfügung zu stellen, der mit verringertem baulichen Aufwand ein sicheres automatisches Aufnehmen und Lösen von verschieden ausgebildeten Pipettenspitzen ermöglicht.

Die Aufgabe wird durch einen Dosierkopf mit den Merkmalen von Anspruch 1 gelöst. Vorteilhafte Ausführungsarten der Erfindung sind in Unteransprüchen angegeben.

Der erfindungsgemäße Dosierkopf für eine Dosiervorrichtung umfasst:
- einen Träger, an dem nebeneinander eine Vielzahl paralleler Ansätze zum Aufnehmen von Pipettenspitzen angeordnet ist,
- wobei jeder Ansatz folgende Merkmale aufweist:
   - ein Rohr mit einem nach außen vorstehenden, zumindest teilweise umlaufenden Stützvorsprung am unteren Ende,
   - eine erste Hülse, die das Rohr umschließt und auf dem Rohr axial verlagerbar ist, und
   - einen elastomeren ersten O-Ring, der das Rohr umschließt, neben dem unteren Ende der Hülse angeordnet ist und unten am Stützvorsprung abgestützt ist,
- eine oberhalb der Hülsen angeordnete Druckplatte mit einer Vielzahl erster Löcher, durch die sich die Rohre hindurch erstrecken, wobei die Druckplatte entlang der Rohre zwischen einer Freigabestellung in einem ersten Abstand von den Stützvorsprüngen und einer Klemmstellung in einem den ersten Abstand unterschreitenden, zweiten Abstand von den Stützvorsprüngen verlagerbar ist, die Druckplatte in der Klemmstellung so gegen den oberen Rand der benachbarten Hülsen sämtlicher Ansätze drückt, dass die Hülsen mit den unteren Enden an die benachbarten O-Ringe angepresst und die O-Ringe aufgeweitet sind, um auf die Ansätze aufgeschobene Pipettenspitzen festzuklemmen,
- eine erste Verlagerungseinrichtung, die mit der Druckplatte verbunden und ausgebildet ist, die Druckplatte zwischen der Freigabestellung und der Klemmstellung zu verlagern.

Bei dem erfindungsgemäßen Dosierkopf wird die Bewegung der ersten Verlagerungseinrichtung mittels der Druckplatte gleichzeitig auf sämtliche Hülsen übertragen. Durch Verlagern der Druckplatte von der Freigabestellung in die Klemmstellung können somit sämtliche O-Ringe aufgeweitet und hierdurch auf die Ansätze aufgeschobene Pipettenspitzen an den Ansätzen fixiert werden. Umgekehrt können durch Verlagern der Druckplatte aus der Klemmstellung in die Freigabestellung sämtliche O-Ringe entspannt und hierdurch die Klemmung der Pipettenspitzen auf den Ansätzen gelöst werden. Ein simultanes Festklemmen und Lösen einer großen Anzahl Pipettenspitzen wird durch das gleichmäßige Drücken der Druckplatte gegen sämtliche Hülsen und durch das gleichmäßige Entlasten sämtlicher Hülsen ermöglicht. Die Erfindung eignet sich insbesondere für Dosierköpfe mit 8, 12, 16, 24, 96 oder 384 Ansätzen. Die Kraftübertragung von der ersten Verstelleinrichtung über die Druckplatte auf die Hülsen begünstigt eine verhältnismäßig einfache, kompakte und leichte Bauweise. Infolgedessen kann auch der bauliche Aufwand einer mit dem Dosierkopf auszurüstenden Dosiervorrichtung reduziert werden. Das Festklemmen durch Aufweiten der O-Ringe begünstigt den Einsatz von Pipettenspitzen mit unterschiedlichen Formen und Abmessungen. Die Erfindung umfasst Ausführungsarten, bei denen jeder Ansatz nur einen einzigen O-Ring und nur eine einzige Hülse aufweist. Ferner umfasst die Erfindung Ausführungsarten, bei denen jeder Ansatz mehrere O-Ringe und mehrere Hülsen aufweist. Bei einer bevorzugten Ausführungsart der Erfindung ist der O-Ring unten am Stützvorsprung abgestützt.

Gemäß einer Ausführungsart weist jeder Ansatz folgende Merkmale auf:
- eine zweite Hülse, die oberhalb der ersten Hülse das Rohr umschließt und auf dem Rohr axial verlagerbar ist,
- einen elastomeren zweiten O-Ring, der das Rohr umschließt, neben dem zweiten Ende der zweiten Hülse angeordnet ist und unten an der ersten Hülse abgestützt ist,
- die ersten und zweiten Hülsen sind zwischen einer Freigabestellung in einem ersten Abstand von den Stützvorsprüngen und einer Klemmstellung in einem den ersten Abstand unterschreitenden, zweiten Abstand von den Stützvorsprüngen verlagerbar, in der Klemmstellung sind die zweiten Hülsen mit den unteren Enden an die benachbarten zweiten O-Ringe angepresst und die ersten Hülsen sind mit den unteren Enden an die benachbarten ersten O-Ringe angepresst und die ersten und zweiten O-Ringe sind aufgeweitet, um auf die Ansätze aufgeschobene Pipettenspitzen festzuklemmen,
- und wobei der Dosierkopf eine zweite Verlagerungseinrichtung aufweist, die mit den ersten und zweiten Hülsen sämtlicher Ansätze gekoppelt und ausgebildet ist, die ersten und zweiten Hülsen zwischen der Freigabestellung und der Klemmstellung zu verlagern, und
- die Druckplatte und die erste Verlagerungseinrichtung die zweite Verlagerungseinrichtung zum Verlagern der ersten und zweiten Hülsen ist und drückt die Druckplatte gegen den oberen Rand der zweiten Hülsen.

Bei dem erfindungsgemäßen Dosierkopf weist jeder Ansatz einen ersten O-Ring und einen zweiten O-Ring auf, die durch Anpressen einer ersten Hülse und einer zweiten Hülse aufweitbar und damit in einer Pipettenspitze festklemmbar sind. Umgekehrt kann die Klemmung des ersten O-Ringes und des zweiten O-Ringes in der Pipettenspitze gelöst werden. Dadurch, dass jede Pipettenspitze mittels zweier O-Ringe an einem Ansatz festgeklemmt ist, wird eine genaue Ausrichtung einer großen Anzahl Pipettenspitzen ermöglicht. Die Erfindung eignet sich insbesondere für Dosierköpfe mit 8, 12, 16, 24, 96 oder 384 Ansätzen, bei denen die Pipettenspitzen möglichst parallel ausgerichtet sein müssen, damit sie gleichzeitig in eine entsprechende Anzahl verschiedener Aufnahmen eingeführt werden können. Zudem werden durch Einsatz zweier O-Ringe die zum Festklemmen erforderlichen Kräfte reduziert. Dies begünstigt eine verhältnismäßig einfache, kompakte und leichte Bauweise. Infolgedessen kann auch der bauliche Aufwand einer mit dem Dosierkopf auszurüstenden Dosiervorrichtung reduziert werden. Ferner begünstigt die Fixierung mittels zweier O-Ringe die Verwendung von Pipettenspitzen mit unterschiedlichen Formen und Abmessungen. Gemäß einer bevorzugten Ausführungsart der Erfindung ist der erste O-Ring unten am Stützvorsprung abgestützt.

Ansätze im Sinne von Anspruch 1 und 2 sind gemäß einer bevorzugten Ausführungsart als konischer, zylindrischer oder teils konischer und teils zylindrischer Vorsprung bezüglich des Gehäuses oder eines anderen Trägers ausgebildet. Vorzugsweise sind die Ansätze fest mit dem Träger des Dosierkopfes verbunden.

O-Ringe gemäß Anspruch 1 und 2 haben gemäß einer bevorzugten Ausführungsart im Längsschnitt (Vertikalschnitt) eine kreisrunde Form, sodass sie insgesamt die geometrische Form eines Torus aufweisen. Die Erfindung umfasst aber auch Ausführungsarten, bei denen die O-Ringe im Längsschnitt eine mehreckige, elliptische oder eine andere Form aufweisen.

Gemäß einer bevorzugten Ausführungsart bestehen die elastomeren O-Ringe aus Gummi, Silikon oder thermoplastischem Elastomer.

Hülsen im Sinne von Anspruch 1 und 2 können sowohl lange hohlzylindrische Körper sein, bei denen die Länge den Innendurchmesser übersteigt, als auch kurze hohlzylindrische Körper, bei denen die Länge geringer als der Innendurchmesser ist. Insbesondere sind auch ringförmige Körper Hülsen im Sinne von Anspruch 1 und 2. Die ringförmigen Körper können verschiedene Querschnittsformen aufweisen. Insbesondere können die ringförmigen Körper in einem Längsschnitt eine mehreckige, elliptische oder kreisrunde Form aufweisen. Wenn die ringförmigen Körper in einem Längsschnitt eine kreisrunde Form aufweist, haben sie insgesamt die geometrische Form eines Torus.

Träger im Sinne der Ansprüche 1 und 2 sind insbesondere Gehäuse und/oder Rahmen (Chassis) oder andere ein- oder mehrteilige tragende Strukturen.

Die erste Verlagerungseinrichtung gemäß Anspruch 1 ist so ausgebildet, dass sie in der Lage ist, die Druckplatte aus der Freigabestellung in die Klemmstellung zu verlagern und die Druckplatte aus der Klemmstellung in die Freigabestellung zu verlagern. Bei dem Dosierkopf von Anspruch 1 sind in der Freigabestellung der Druckplatte auch die Hülsen in einer Freigabestellung angeordnet und sind in der Klemmstellung der Druckplatte auch die Hülsen in einer Klemmstellung angeordnet. Anspruch 1 umfasst Ausführungsarten, bei denen die Verlagerung der Hülsen aus der Klemmstellung in die Freigabestellung dadurch erfolgt, dass die Druckplatte die Hülsen entlastet, sodass sie aufgrund der Rückstellkräfte der O-Ringe aus der Klemmstellung in die Freigabestellung verlagert werden. Ferner umfasst Anspruch 1 Ausführungsarten, bei denen die Druckplatte die Hülsen aktiv aus der Klemmstellung in die Freigabestellung verlagert, beispielsweise indem sie fest mit den Hülsen verbunden ist. Anspruch 23 bezieht sich auf die Freigabestellung und die Klemmstellung der Hülsen gemäß einem der Ansprüche 1 und 2.

Die zweite Verlagerungseinrichtung gemäß Anspruch 2 ist so ausgebildet, dass sie in der Lage ist, die ersten und zweiten Hülsen aus der Freigabestellung in die Klemmstellung zu verlagern und die ersten und zweiten Hülsen aus der Klemmstellung in die Freigabestellung zu verlagern. Anspruch 2 umfasst Ausführungsarten, bei denen die Verlagerung der ersten und zweiten Hülsen aus der Klemmstellung in die Freigabestellung dadurch erfolgt, dass die zweite Verlagerungseinrichtung die ersten und zweiten Hülsen entlastet, sodass sie aufgrund der Rückstellkräfte der ersten und zweiten O-Ringe aus der Klemmstellung in die Freigabestellung verlagert werden. Hierbei ist die zweite Verlagerungseinrichtung z.B. durch die Druckplatte und die erste Verlagerungseinrichtung gemäß Anspruch 1 gebildet. Ferner umfasst Anspruch 2 Ausführungsarten, bei denen die zweite Verlagerungseinrichtung die ersten und zweiten Hülsen aktiv aus der Klemmstellung in die Freigabestellung verlagert.

Gemäß einer Ausführungsart des Dosierkopfes von Anspruch 1 haben die Hülsen am unteren Ende eine umlaufende Verjüngung. Gemäß einer Ausführungsart der Dosierkopfes von Anspruch 2 haben die ersten Hülsen am unteren Ende eine umlaufende erste Verjüngung und/oder die zweiten Hülsen am unteren Ende eine umlaufende zweite Verjüngung. Beim Verlagern aus der Freigabestellung in die Klemmstellung werden die (ersten und/oder zweiten) Hülsen mit ihren (ersten und/oder zweiten) Verjüngungen in die benachbarten (ersten und/oder zweiten) O-Ringe hineingepresst, wodurch die (ersten und/oder zweiten) O-Ringe besonders stark aufgeweitet werden und die auf die Ansätze aufgeschobenen Pipettenspitzen besonders fest festgeklemmt werden. Die Klemmwirkung ist stärker, als wenn die (ersten und/oder zweiten) O-Ringe lediglich durch Anpressen von flachen unteren Enden (erster und/oder zweiter) Hülsen in vertikaler Richtung radial aufgeweitet werden. (Erste und/oder zweite) Verjüngungen im Sinne der Erfindung sind allgemein zum unteren Ende der Hülse hin sich verjüngende Rotationsflächen. Gemäß bevorzugter Ausführungsarten weisen die Verjüngungen mindestens eine der nachfolgenden Geometrien auf: Kegelstumpffläche ("Fase") oder Kugelzone. Kombinationen der vorgenannten Geometrien sind ebenfalls Verjüngungen im Sinne der Erfindung.

Der Dosierkopf ist bevorzugt so ausgebildet, dass die zum Aufweiten der O-Ringe auftretenden Kräfte im Dosierkopf verbleiben und eine mit dem Dosierkopf zu verbindende Dosiervorrichtung nicht belasten. Hierfür stützt sich gemäß einer bevorzugten Ausführungsart die erste Verlagerungseinrichtung oder die zweite Verlagerungseinrichtung am Träger ab. Hierfür ist z.B. die erste oder zweite Verlagerungseinrichtung am Träger gehalten oder festgelegt. Durch die Abstützung der ersten oder zweiten Verlagerungseinrichtung am Träger werden die auf die Verlagerungseinrichtung wirkenden Reaktionskräfte beim Verlagern der Hülsen in den Träger abgeleitet. Die auf die O-Ringe beim Einpressen der Hülsen wirkenden Reaktionskräfte werden über die Stützvorsprünge und die Ansätze ebenfalls in den Träger abgeleitet. Infolgedessen verbleiben die beim Aufweiten der O-Ringe auftretenden Kräfte im Dosierkopf.

Gemäß einer bevorzugten Ausführungsart unterschreitet der Innendurchmesser des ersten O-Ringes den Innendurchmesser des zweiten O-Ringes und unterschreitet der Außendurchmesser des ersten O-Ringes den Außendurchmesser des zweiten O-Ringes. Diese Angaben beziehen sich auf den unverformten Zustand des ersten O-Ringes und des zweiten O-Ringes. Diese Ausführungsart begünstigt ein Festklemmen von Pipettenspitzen mit einer Aufweitung am oberen Ende auf den Ansätzen. Die Aufweitung erleichtert die Einführung der Ansätze in die Pipettenspitzen.

Gemäß einer weiteren Ausführungsart ist der erste O-Ring am Innenumfang auf dem Rohr geführt und der zweite O-Ring am Innenumfang auf einem darin eingreifenden Ende der zweiten Hülse geführt. Hierdurch werden der erste O-Ring und der zweite O-Ring vorteilhaft auf dem Ansatz zentriert.

Gemäß einer bevorzugten Ausführungsart ist der Stützvorsprung ein um das untere Ende des Rohrs umlaufender Stützring. Der Stützring kann fertigungstechnisch vorteilhaft mit dem Rohr zusammengefügt werden. Gemäß einer weiteren Ausführungsart verjüngt sich der Stützring zu seinem unteren Ende hin. Hierdurch wird das Einführen des Ansatzes in die Aufstecköffnung einer Pipettenspitze erleichtert.

Gemäß einer bevorzugten Ausführungsart ist die Druckplatte unterhalb des Trägers angeordnet. Dann kann die Druckplatte direkt an umlaufenden oberen Rändern der Hülsen anliegen. Die Druckplatte kann aber auch oberhalb des Trägers angeordnet sein und an Verlängerungen der Hülsen anliegen, die Durchgangsöffnungen des Trägers durchgreifen.

Gemäß einer bevorzugten Ausführungsart weist die erste Verlagerungseinrichtung mindestens eine Führungsachse auf, die unten mit der Druckplatte verbunden ist und oben über ein Exzentergetriebe mit einem Elektromotor gekoppelt ist. Dies ermöglicht eine baulich besonders einfache und präzise erste Verlagerungseinrichtung.

Gemäß einer weiteren Ausführungsart sind vier Führungsachsen am unteren Ende mit der Druckplatte fest verbunden und am oberen Ende über mindestens ein Exzentergetriebe mit mindestens einem Elektromotor gekoppelt. Hierdurch wird mit geringem baulichem Aufwand eine genaue Parallelführung der Druckplatte erreicht.

Gemäß einer weiteren Ausführungsart ist jede Führungsachse in einem Kugelumlauflager gelagert, das im Träger gehalten ist. Hierdurch wird eine besonders reibungsarme und präzise erste Verlagerungseinrichtung erreicht.

Gemäß einer weiteren Ausführungsart weist jede Führungsachse am oberen Ende eine senkrecht zur Führungsachse erstreckte Kulisse auf, greift ein Exzenter an einer senkrecht zur Führungsachse und zur Kulisse gerichteten ersten Welle in die Kulisse ein und ist die erste Welle mit einem Elektromotor gekoppelt. Hierdurch wird in besonders einfacher und reibungsarmer Weise die Drehbewegung eines Elektromotors in die Axialbewegung mindestens einer Führungsachse umgesetzt.

Gemäß einer bevorzugten Ausführungsart trägt jeder Exzenter ein Kugellager, das in einer Kulisse geführt ist. Hierdurch wird eine besonders reibungsarme Kraftübertragung von Exzenter auf die Führungsachsen erreicht.

Gemäß einer bevorzugten Ausführungsart ist ein einziger Elektromotor über ein erstes Getriebe mit sämtlichen ersten Wellen gekoppelt. Hierdurch wird ein besonders einfache, raum- und gewichtssparende Bauweise erreicht. Eine Synchronisierung mehrerer Elektromotoren für einen Gleichlauf der Führungsachsen erübrigt sich. Gemäß einer bevorzugten Ausführungsart ist das erste Getriebe ein Schneckengetriebe.

Gemäß einer bevorzugten Ausführungsart sind mehrere erste Wellen parallel zueinander angeordnet und jeweils drehfest mit einem ersten Schneckenrad verbunden, fluchten die ersten Schneckenräder miteinander, ist in derselben Ebene wie die ersten Schneckenräder eine zweite Welle angeordnet, ist die zweite Welle drehfest mit ersten Schnecken verbunden, wobei jeweils eine erste Schnecke mit einem ersten Schneckenrad kämmt, und ist die zweite Welle mit dem Elektromotor gekoppelt. Dies ermöglicht einen platz- und gewichtssparenden Aufbau. Gemäß einer weiteren Ausführungsart ist die zweite Welle drehfest mit einem zweiten Schneckenrad verbunden und ist die Motorwelle des Elektromotors drehfest mit einer zweiten Schnecke verbunden, die mit dem zweiten Schneckenrad kämmt. Dies begünstigt einen platz- und gewichtssparenden Aufbau.

Gemäß einer weiteren Ausführungsart ist der mindestens eine Elektromotor mit einer elektrischen Steuerungseinrichtung gekoppelt, die den Elektromotor so steuert, dass die Druckplatte zwischen der Freigabestellung und der Klemmstellung verlagerbar ist.

Gemäß einer weiteren Ausführungsart ist der mindestens eine Elektromotor mit einem Drehwinkelgeber gekoppelt, der mit der elektrischen Steuerungseinrichtung verbunden ist, die ausgebildet ist, die Lage der Druckplatte in Abhängigkeit von der mittels des Drehwinkelgebers erfassten Drehstellung der Motorwelle des Elektromotors zu ermitteln. Diese Ausführungsart gewährleistet eine besonders präzise Verlagerung der Druckplatte zwischen der Freigabestellung und der Klemmstellung.

Gemäß einer bevorzugten Ausführungsart ist unterhalb der Druckplatte eine Anschlagplatte angeordnet, die eine Vielzahl zweiter Löcher aufweist, durch die sich die Ansätze hindurcherstrecken, um Pipettenspitzen bis zur Anlage an der Anschlagplatte auf die Ansätze aufzuschieben. Durch die Anschlagplatte wird erreicht, dass sämtliche Pipettenspitzen simultan in eine vorgegebene Position auf die Ansätze aufgeschoben werden. Hierfür kann der Dosierkopf mit den Ansätzen in eine bereitgestellte Gruppe Pipettenspitzen eingesetzt werden, bis die Anschlagplatte auf dem oberen Rand der Pipettenspitzen aufsitzt. Gemäß einer weiteren Ausführungsart ist die Anschlagplatte fest an dem Träger gehalten.

Gemäß einer bevorzugten Ausführungsart ist eine dritte Verlagerungseinrichtung mit der Anschlagplatte verbunden und ausgebildet, die Anschlagplatte zwischen einer Anschlagstellung in einem ersten Abstand von den Stützvorsprüngen und einer Abwurfstellung in einem zweiten Abstand von den Stützvorsprüngen, der den ersten Abstand unterschreitet, zu verlagern, um in der Anschlagstellung Pipettenspitzen bis zur Anlage an der Anschlagplatte auf die Ansätze aufzuschieben und durch Verlagern der Anschlagplatte aus der Anschlagstellung in die Abwurfstellung von den Ansätzen abzuwerfen. Hierdurch wird das Abwerfen der Pipettenspitzen von den Ansätzen auch dann gewährleistet, wenn die O-Ringe nach Entlastung durch die Hülsen noch an den Innenseiten der Pipettenspitzen anliegen und diese festhalten. Die Anschlagplatte ist eine Abwurfplatte. Insbesondere können die Pipettenspitzen nach Entlastung der Hülsen an den O-Ringen haftenbleiben ("festkleben"), sodass sie nicht ohne weiteres herunterfallen.

Gemäß einer weiteren Ausführungsart umfasst die dritte Verlagerungseinrichtung schwenkbar auf dem Träger gelagerte Kipphebel, fest mit der Druckplatte verbundene, von dieser hochstehende Übertragungsachsen, die jeweils an einem Ende eines Kipphebels anliegen, und fest mit der Anschlagplatte verbundene, jeweils an einem anderen Ende des Kipphebels anliegende Abwurfachsen, sodass beim Anheben der Druckplatte die Übertragungsachsen die Kipphebel schwenken und diese über die Abwurfachsen die Anschlagplatte aus der Anschlagstellung in die Abwurfstellung drücken. Bei dieser Ausführungsart wird vorteilhaft die Bewegung der Druckplatte zum Entlasten der O-Ringe für das Verlagern der Anschlagplatte in die Abwurfstellung genutzt. Hierdurch wird Aufwand für die dritte Verlagerungseinrichtung reduziert. Zudem werden die beim Abwerfen der Pipettenspitzen auftretenden Kräfte vom Dosierkopf aufgefangen.

Gemäß einer weiteren Ausführungsart ist zwischen der Anschlagplatte und dem Träger eine Federeinrichtung vorhanden, welche die Anschlagplatte in die Anschlagposition zurückverlagert, wenn die Druckplatte aus der Freigabestellung in die Klemmstellung verlagert wird. Dies ist insbesondere vorteilhaft bei Ausführungen der dritten Verlagerungseinrichtung mit Kipphebeln, weil diese beim Absenken der Druckplatte von den Übertragungsachsen nicht zurückgeschwenkt werden. Gemäß einer bevorzugten Ausführungsart weist der Träger mindestens eine Anschlageinrichtung auf, an der die Anschlagplatte in Anschlagposition anliegt, sodass sie nicht weiter zum Träger hin verlagert werden kann. Bei einer einfachen Ausführungsart ist die Anschlageinrichtung gebildet von zumindest drei Anschlagelementen, die von der Unterseite des Trägers nach unten vorstehen, sodass die Oberseite der Anschlagplatte in der Anschlagposition zur Anlage an den Anschlagelementen kommt.

Gemäß einer weiteren Ausführungsart sitzt auf jedem Rohr neben der Druckplatte ein Ausgleichsring und drückt die Druckplatte über den Ausgleichsring gegen das obere Ende der benachbarten Hülse. Hierdurch wird eine kompakte Bauweise begünstigt, da die Druckplatte nahe an die Anschlagplatte heran verlagert werden kann.

Gemäß einer weiteren Ausführungsart weisen die Hülsen oben eine ebene Stirnfläche auf, an der die Druckplatte oder der zweite O-Ring oder der Ausgleichsring anliegt. Hierdurch wird eine vorteilhafte Kraftübertragung zwischen den Hülsen und den O-Ringen erreicht.

Eine weitere Ausführungsart der Erfindung ist in Anspruch 13 angegeben:
- wobei die erste Verlagerungseinrichtung folgende Merkmale aufweist:
   - eine unterhalb der Druckplatte angeordnete Anschlagplatte, die eine Vielzahl zweiter Löcher aufweist, durch die sich die Ansätze hindurch erstrecken, wobei die Anschlagplatte zwischen einer Anschlagstellung in einem ersten Abstand von den Stützvorsprüngen und einer Abwurfstellung in einem zweiten Abstand von den Stützvorsprüngen, der den ersten Abstand unterschreitet, verlagerbar ist, und
   - ein zweites Getriebe, das mit der Anschlagplatte und der Druckplatte gekoppelt ist, wobei das zweite Getriebe ausgebildet ist, bei Verlagerung der Anschlagplatte aus der Abwurfstellung in die Anschlagstellung die Druckplatte aus der Freigabestellung in die Klemmstellung zu verlagern,
      wobei der Dosierkopf zudem folgende Merkmale umfasst:
- eine Rasteinrichtung, die mindestens ein mit der Anschlagplatte verbundenes erstes Rastelement und mindestens ein mit dem Träger verbundenes zweites Rastelement aufweist, wobei die ersten und zweiten Rastelemente ausgebildet sind, miteinander zu verrasten, wenn die Druckplatte in der Klemmstellung angeordnet ist, und
- eine Entrastungseinrichtung, die mindestens ein Entrastungselement und ein mit dem Entrastungselement verbundenes Abwerferelement aufweist, wobei die Entrastungseinrichtung ausgebildet ist, bei Verlagerung des Abwerferelements aus einer Ausgangsstellung in eine Entrastungsstellung die Rastverbindung zwischen dem ersten Rastelement und dem zweiten Rastelement aufzuheben.

Beim Aufstecken der Pipettenspitzen auf die Ansätze treffen die Pipettenspitzen mit ihrem oberen Rand auf die Anschlagplatte und verlagern diese nach oben. Gleichzeitig wird die oberhalb der Anschlagplatte angeordnete Druckplatte nach unten bewegt. Hierbei verlagert die Druckplatte die Hülsen nach unten, wodurch die O-Ringe auf den Ansätzen aufgeweitet und die Pipettenspitzen auf den Ansätzen festgeklemmt werden. In der Klemmposition wird die Druckplatte verrastet, sodass die Pipettenspitzen am Dosierkopf fixiert sind. Zum Lösen der Pipettenspitzen wird die Rasteinrichtung mittels der Entrastungseinrichtung entrastet. Hierfür wird das Abwerferelement betätigt, sodass das Entrastungselement die Verrastung zwischen dem ersten und dem zweiten Rastelement aufhebt. Nach Entrastung der Rasteinrichtung können die Hülsen und die Druckplatte aufgrund der Wirkung der elastischen O-Ringe in die Freigabestellung zurückkehren. Die O-Ringe ziehen sich zusammen und die Klemmung zwischen den Pipettenspitzen und den Ansätzen wird gelöst, sodass diese von den Ansätzen herunterfallen können. Bei dieser Ausführungsart werden beim Aufstecken der Pipettenspitzen auf die Ansätze auftretende Kräfte für das Festklemmen der Pipettenspitzen auf den Ansätzen genutzt. Die erste Verlagerungseinrichtung ist durch die Anschlagplatte und das zweite Getriebe gebildet. Sie ist besonders einfach und platzsparend ausführbar. Die Anschlagplatte kann zusätzlich zum Aufschieben der Pipettenspitzen in eine vorgegebene Position auf die Ansätze und zum Abstreifen der Pipettenspitzen von den Ansätzen genutzt werden. Bevorzugt ist der Dosierkopf bestimmt für die Verwendung mit einer Handpipette.

Gemäß einer weiteren Ausführungsart ist das zweite Getriebe ein Hebelgetriebe, dass zwei Winkelhebel umfasst, die schwenkbar am Träger gelagert sind, mit den Enden eines ersten Hebebelarmes in einem Abstand voneinander an der Oberseite der Druckplatte anliegen und mit den Enden eines zweiten Hebelarmes in einem Abstand voneinander mit der Anschlagplatte gekoppelt sind. Wenn die Anschlagplatte von den oberen Rändern der Pipettenspitzen nach oben verlagert wird, schwenkt sie die zweiten Hebelarme nach oben. Hierdurch werden die ersten Hebelarme nach unten geschwenkt und verlagern die Druckplatte nach unten, wodurch die Pipettenspitzen auf den Ansätzen festgeklemmt werden. Nach Entrastung der Rasteinrichtung kann die Anschlagplatte durch ihr Eigengewicht in die Abwurfstellung zurückverlagert werden und sich die Pipettenspitzen von den Ansätzen lösen. Das zweite Getriebe ist baulich besonders einfach und platzsparend ausführbar.

Gemäß einer weiteren Ausführungsart ist das erste Rastelement eine von der Anschlagplatte vertikal nach oben vorstehende Zahnstange und das zweite Rastelement eine schwenkbar am Träger gelagerte und von einer Federeinrichtung in Richtung auf die Zahnstange vorgespannte Rastklinke, die bei Verlagerung der Anschlagplatte nach oben in die Zahnstange einrastet. Diese Rasteinrichtung ist baulich besonders einfach und platzsparend ausführbar. Eine bevorzugte Ausführungsart weist genau zwei Zahnstangen und genau zwei Rastklinken auf. Gemäß einer weiteren Ausführungsart stehen die Zahnstangen von den Enden der Anschlagplatte nach oben vor. Gemäß einer weiteren Ausführungsart weisen die Zahnstangen die Zahnungen an den einander zugewandten Rändern auf.

Gemäß einer weiteren Ausführungsart umfasst die Entrastungseinrichtung mindestens ein Keilgetriebe, das ein spitzwinklig zur Vertikalen geneigtes erstes Keilelement an der Rastklinke und/oder ein spitzwinklig zur Vertikalen geneigtes zweites Keilelement am Abwerferelement aufweist, ist das Abwerferelement an Führungseinrichtungen in vertikaler Richtung verlagerbar am Träger geführt, sodass durch Verlagerung des Abwerferelements in vertikaler Richtung das Abwerferelement und die Rastklinke mit mindestens einem der ersten und zweiten Keilelemente in Eingriff miteinander bringbar sind, wodurch die Rastklinke aus der Zahnung der Zahnstange aushebbar ist.

Gemäß einer weiteren Ausführungsart umfasst ein erstes Abwerferteil die Anschlagplatte und zwei von der Anschlagplatte nach oben vorstehende Zahnstangen, umfasst ein zweites Abwerferteil in Form einer Traverse, zwei vertikal von der Traverse nach unten vorstehende Abwerferelemente und ein vertikal nach oben vorstehendes Betätigungselement und weisen das erste Abwerferteil und das zweite Abwerferteil erste und zweite Anschlagelemente auf, die nach dem Entrasten der ersten und zweiten Rastelemente aufeinandertreffen, wodurch das zweite Abwerferteil bei einer weiteren Verlagerung nach unten das erste Abwerferteil mitnimmt. Bei dieser Ausführungsart wird durch Verlagerung des zweiten Abwerferteils nach unten zunächst die Entrastungseinrichtung entrastet und danach die Anschlagplatte nach unten mitgenommen, um die Pipettenspitzen von den Ansätzen abzustreifen. Gemäß einer weiteren Ausführungsart sind die Abwerferelemente Abwerferstangen. Gemäß einer weiteren Ausführungsart weisen die Abwerferelemente an ihren unteren Enden erste Keilelemente auf.

Gemäß einer weiteren Ausführungsart weist der Dosierkopf 8, 12, 16 oder 24 Ansätze auf.

Gemäß einer weiteren Ausführungsart sind auf den Ansätzen des Dosierkopfes Pipettenspitzen angeordnet und durch Aufweiten der O-Ringe festgeklemmt. Die Pipettenspitzen sind jeweils Röhrchen mit einer Spitzenöffnung am unteren Ende und einer Aufstecköffnung am oberen Ende. Der Innendurchmesser und der Außendurchmesser der Pipettenspitze vergrößern sich im Allgemeinen von der Spitzenöffnung zur Aufstecköffnung hin. Gemäß einer bevorzugten Ausführungsart liegen die oberen Ränder der Pipettenspitzen an der Unterseite der Anschlagplatte an.

Gemäß einer bevorzugten Ausführungsart umfasst der Dosierkopf mindestens eine Verdrängungseinrichtung, die mit den Verbindungslöchern der Ansätze kommunizierend verbunden ist. Hierfür erstrecken sich Kanäle von einem Zylinder oder einer anderen Verdrängungskammer der Verdrängungseinrichtung durch die Ansätze hindurch bis zu den Verbindungslöchern der Ansätze. Gemäß einer bevorzugten Ausführungsart umfasst der Dosierkopf eine Vielzahl Verdrängungseinrichtungen, wobei die Verdrängungskammer jeder Verdrängungseinrichtung mit dem Verbindungsloch eines einzigen Ansatzes kommunizierend verbunden ist. Gemäß einer bevorzugten Ausführungsart ist jede Verdrängungseinrichtung ein Zylinder mit einem darin verschieblichen Kolben. Alternativ ist jede Verdrängungseinrichtung eine Verdrängungskammer mindestens einer verformbaren Wand.

Ferner liegt der Erfindung die Aufgabe zugrunde, eine Dosiervorrichtung mit einer großen Anzahl Ansätze, insbesondere 8, 12, 16, 24, 96 oder 384 Ansätze, zum gleichzeitigen Aufnehmen einer großen Anzahl Pipettenspitzen zur Verfügung zu stellen, die mit verringertem baulichen Aufwand ein sicheres automatisches Aufnehmen und Lösen von verschieden ausgebildeten Pipettenspitzen ermöglicht.

Die Aufgabe wird durch eine Dosiervorrichtung mit den Merkmalen von Anspruch 18 gelöst. Vorteilhafte Ausgestaltungen der Dosiervorrichtung sind in Unteransprüchen angegeben.

Gemäß Anspruch 18 umfasst die Dosiervorrichtung einen Dosierkopf zum Dosieren von Flüssigkeiten der vorbeschriebenen Art, insbesondere einen Dosierkopf gemäß einem der Ansprüche 1 bis 17.

Aufgrund der vergleichsweise geringen Baugröße, des geringen Gewichts des erfindungsgemäßen Dosierkopfes und des verringerten Kraftaufwandes für das Festklemmen von Pipettenspitzen und Lösen der Pipettenspitzen von dem Dosierkopf kann der bauliche Aufwand für die Dosiervorrichtung verringert werden. Die Dosiervorrichtung kann für besonders geringe Belastungen ausgelegt werden, wenn der Dosierkopf so ausgebildet ist, dass beim Aufweiten der O-Ringe auftretende Kräfte im Dosierkopf verbleiben.

Gemäß einer weiteren Ausführungsart ist die Dosiervorrichtung eine Dosierstation, ein Dosierautomat oder Laborautomat. Gemäß einer bevorzugten Ausführungsart ist die Dosierstation, der Dosierautomat oder Laborautomat mit einem Dosierkopf mit 96 Ansätzen für 96 Pipettenspitzen oder mit einem Dosierkopf mit 384 Ansätzen für 384 Pipettenspitzen ausgerüstet.

Gemäß einer weiteren Ausführungsart ist die Dosiervorrichtung eine manuell oder elektromotorisch angetriebene, handhabbare Mehrkanalpipette, die vom Anwender beim Dosieren in der Hand gehalten werden kann. Die Mehrkanalpipette weist vorzugsweise acht oder 12 Ansätze für acht oder 12 Pipettenspitzen oder ein ganzzahliges Mehrfaches von acht oder 12 Ansätzen für eine entsprechende Anzahl Pipettenspitzen auf.

Gemäß einer bevorzugten Ausführungsart umfasst die Dosierstation, der Dosierautomat oder der Laborautomat mindestens eine der nachstehenden Einrichtungen:
- mindestens einen Halter mit einer Vielzahl darin gehaltener Pipettenspitzen,
- mindestens ein Probengefäß zum Bereitstellen von flüssigen Proben,
- mindestens ein Reagenzgefäß zum Bereitstellen von Reagenzien,
- mindestens einen Abfallbehälter zum Aufnehmen gebrauchter Pipettenspitzen.

Gemäß einer bevorzugten Ausführungsart der Dosierstation, des Dosierautomaten oder des Laborautomaten ist der Dosierkopf an einem Dreiachsübertrager gehalten, der ausgebildet ist, den Dosierkopf entlang von drei Achsen im Raum zu verlagern.

Ferner liegt der Erfindung die Aufgabe zugrunde, ein Verfahren zum Dosieren von Flüssigkeiten mit einem Dosierkopf zu schaffen, bei dem gleichzeitig eine große Anzahl Pipettenspitzen, insbesondere 8, 12, 16, 24, 96 oder 384 Pipettenspitzen, insbesondere verschieden ausgebildete Pipettenspitzen, unter verringertem baulichen Aufwand sicher automatisch aufgenommen und gelöst werden können.

Die Aufgabe wird durch ein Verfahren zum Dosieren von Flüssigkeiten gemäß Anspruch 22 gelöst. Vorteilhafte Ausführungsarten der Erfindung sind in Unteransprüchen angegeben.

Bei dem erfindungsgemäßen Verfahren zum Dosieren von Flüssigkeiten werden die Flüssigkeiten mittels eines Dosierkopfes der vorbeschriebenen Art, insbesondere mittels eines Dosierkopfes gemäß einem der Ansprüche 1 bis 17, dosiert. Das erfindungsgemäße Verfahren verwendet den erfindungsgemäßen Dosierkopf. Es macht sich die Vorteile zunutze, die dem Dosierkopf gemäß obigen Erläuterungen zukommen.

Gemäß einer bevorzugten Ausführungsart des Verfahrens werden
- eine Gruppe Pipettenspitzen in einem Halter für Pipettenspitzen bereitgestellt,
- die Hülsen in die Freigabestellung verlagert,
- der Dosierkopf mit den Ansätzen in die Aufstecköffnungen der bereitgestellten Pipettenspitzen eingeführt, sodass die O-Ringe in die bereitgestellten Pipettenspitzen eintauchen,
- die Hülsen in die Klemmstellung gebracht und hierdurch die Pipettenspitzen auf den Ansätzen festgeklemmt,
- der Dosierkopf angehoben und die darauf festgeklemmten Pipettenspitzen aus dem Halter entnommen,
- mit den auf den Ansätzen des Dosierkopfes festgeklemmten Pipettenspitzen Dosierungen durchgeführt,
- die Pipettenspitzen durch Verlagern der Hülsen aus der Klemmstellung in die Freigabestellung von den Ansätzen freigegeben.

Gemäß einer bevorzugten Ausführungsart wird eine Dosierstation, ein Dosierautomat oder ein Laborautomat mit dem Dosierkopf ausgerüstet und die Verlagerungen des Dosierkopfes durch einen Dreiachsübertrager des Dosierautomaten oder Laborautomaten durchgeführt.

Gemäß einer weiteren Ausführungsart wird der Dosierkopf mit einer elektrischen Steuerungseinrichtung des Dosierautomaten oder Laborautomaten gekoppelt und die Verlagerungen der ersten oder zweiten Verlagerungseinrichtung des Dosierkopfes durch die elektronische Steuerungseinrichtung gesteuert.

Gemäß einer weiteren Ausführungsart wird vor dem Eintauchen der Ansätze in die Pipettenspitzen die Anschlagplatte in die Anschlagstellung gebracht und die Ansätze in die Pipettenspitzen eingetaucht, bis die oberen Enden der Pipettenspitzen an der Anschlagplatte anliegen, danach die Pipettenspitzen durch Verlagern der Hülsen aus der Freigabestellung in die Klemmstellung an den Ansätzen festgeklemmt und nach Durchführen der Dosierungen die Pipettenspitzen durch Verlagern der Hülsen aus der Klemmstellung in die Freigabestellung und durch Verlagern der Anschlagplatte aus der Anschlagstellung in die Abwurfstellung von den Ansätzen gelöst.

Gemäß einer weiteren Ausführungsart wird mit den Pipettenspitzen an dem Dosierkopf Flüssigkeit aus Gefäßen aufgenommen und in Gefäße abgegeben.

Gemäß einer weiteren Ausführungsart wird der Dosierkopf vor dem Abwerfen der Pipettenspitzen von den Ansätzen über einen Abfallbehälter verlagert und die Pipettenspitzen in den Abfallbehälter abgeworfen.

Die Erfindung wird nachfolgend anhand der anliegenden Zeichnungen eines Ausführungsbeispiels erläutert. In den Zeichnungen zeigen:
- Fig. 1: einen Dosierkopf in einer Perspektivansicht schräg von vorn und von der Seite;
- Fig. 2: den Dosierkopf mit Pipettenspitzen in einer Perspektivansicht schräg von vom und von der anderen Seite;
- Fig. 3: den Dosierkopf mit Pipettenspitzen in einer Perspektivansicht schräg von hinten und von der Seite;
- Fig. 4: einen Ansatz des Dosierkopfes eingeführt in einer Pipettenspitze vor dem Festklemmen der Pipettenspitze in einem Vertikalschnitt;
- Fig. 5: den Ansatz festgeklemmt in der Pipettenspitze in einem Vertikalschnitt.
- Fig. 6: den Dosierkopf mit einer festgeklemmten Pipettenspitze in einer teilweise geschnittenen Vorderansicht;
- Fig. 7: den Dosierkopf beim Abwerfen der Pipettenspitze in einer teilweise geschnittenen Vorderansicht.
- Fig. 8: ein Befestigungszapfen und Kolbenplatte umfassender oberer Teil des Dosierwerkzeuges in einem Vertikalschnitt;
- Fig. 9: den Dosierkopf in einem Dosierautomaten in einer Perspektivansicht schräg von oben und von der Seite;
- Fig. 10: einen weiteren Dosierkopf ohne hintere Gehäuseschale bei der Aufnahme von Pipettenspitzen in Rückansicht;
- Fig. 11: den Dosierkopf ohne hintere Gehäuseschale mit aufgeklemmten Pipettenspitzen in Rückansicht;
- Fig. 12: vergrößertes Detail von Fig. 11;
- Fig. 13: weiteres vergrößertes Detail von Fig. 11;
- Fig. 14: den Dosierkopf ohne hintere Gehäuseschale beim Abwerfen von Pipettenspitzen in Rückansicht;
- Fig. 15: vergrößertes Detail von Fig. 14;
- Fig. 16: derselbe Dosierkopf in einem Vertikalschnitt;
- Fig. 17: den Dosierkopf an einer mechanischen Handpipette in einer Perspektivansicht schräg von hinten;
- Fig. 18: einen weiteren Dosierkopf in einem Vertikalschnitt;
- Fig. 19: den Dosierkopf an einer elektronischen Handpipette in einer Perspektivansicht schräg von hinten.

In dieser Anmeldung beziehen sich die Angaben "oben" und "unten", "horizontal" und "vertikal" auf eine Ausrichtung des Dosierkopfes mit den Ansätzen in vertikaler Richtung, wobei die Ansätze unten und die übrigen Teile des Dosierkopfes darüber angeordnet sind.

Bei der Beschreibung verschiedener Ausführungsformen werden für Bauteile mit übereinstimmenden Bezeichnungen dieselben Bezugsziffern verwendet.

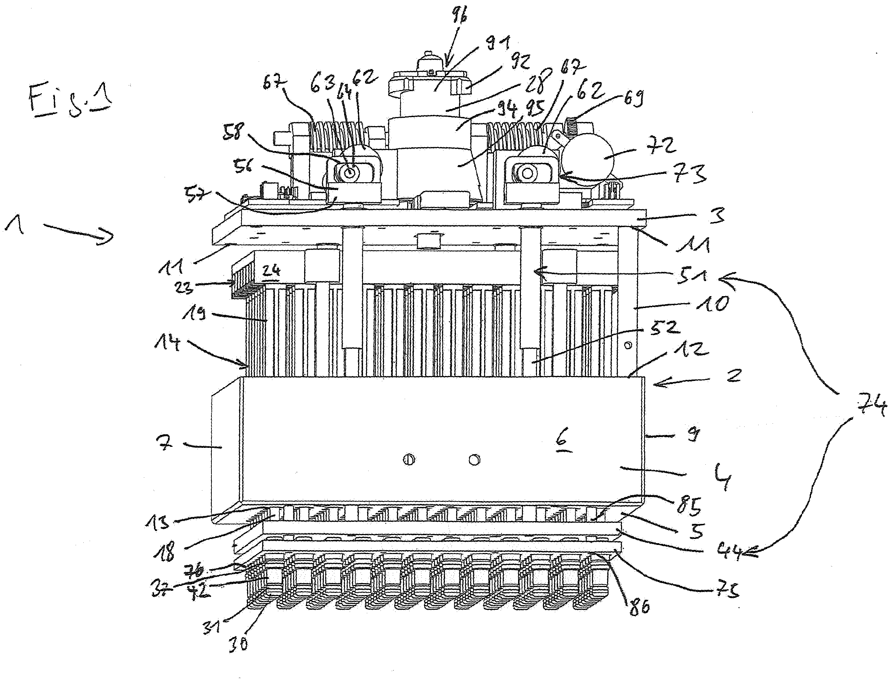

Gemäß Fig. 1 bis 3 umfasst ein Dosierkopf 1 einen mehrteiligen Träger 2, der eine rechteckige Trägerplatte 3 und darunter ein kastenförmiges, oben offenes Trägergehäuse 4 aufweist. Das Trägergehäuse 4 hat eine Bodenwand 5 und von den Rändem der Bodenwand 5 hochstehende Seitenwände 6, 7, 8, 9. Die Trägerplatte 3 ist parallel zur Bodenwand 5 ausgerichtet. Die Trägerplatte 3 ist durch Stehbolzen 10 in einem Abstand vom oberen Rand des Trägergehäuses 4 festgehalten. Die Enden der Stehbolzen 10 sind in ersten und zweiten Gewindebohrungen 11, 12 an den vier Ecken der Trägerplatte 3 und des oberen Randes des Trägergehäuses 4 eingeschraubt. Aus Vereinfachungsgründen ist nur ein Stehbolzen 10 gezeigt.

In der Bodenwand 5 sind in einer Rasteranordnung mit acht Reihen und zwölf Spalten insgesamt 96 dritte Gewindebohrungen 13 ausgebildet. Der Dosierkopf umfasst 96 parallele Kolben-Zylinder-Einheiten 14. Das Raster entspricht dem Raster von Vertiefungen einer Mikrotiterplatte gemäß SBS (Society for Biomolecular Screening)-Spezifikation. Jede Kolben-Zylinder-Einheit 14 weist einen Zylinder 15 und einen Kolben 16 auf. Jeder Zylinder 15 hat ein Außengewinde 17, das in eine der dritten Gewindebohrungen 13 eingeschraubt ist. Unten hat jeder Zylinder 15 ein Rohr 18, das von der Bodenwand 5 nach unten vorsteht.

In jeden Zylinder 15 ist am Umfang abdichtend und axial verschieblich ein Kolben 16 eingesetzt. Jeder Kolben 16 ist mit einer Kolbenstange 19 verbunden, die oben aus dem Zylinder 15 hinaussteht. Jede Kolbenstange 19 hat am oberen Ende einen Kolbenkopf 20 und darunter eine umlaufende Ringnut 21.

Unterhalb der Trägerplatte 3 ist eine zur Trägerplatte 3 parallele, rechteckige Kolbenplatte 22 angeordnet. Die Kolbenplatte 22 hat an der Unterseite acht nach unten geöffnete Kanäle 23, die parallel zu den Reihen aus dritten Gewindebohrungen 13 in der Bodenwand 5 verlaufen.

Jeder Kanal 23 ist durch zwei streifenförmige Kanalwände 24 und durch zwei von den unteren Enden der Kanalwände 24 nach innen vorstehende Kanalschultern 25 begrenzt. Die Kanalwände 24 an den beiden längsseitigen Rändern der Kolbenplatte 22 begrenzen jeweils nur auf einer Seite den benachbarten Kanal 23. Die übrigen Kanalwände 24 begrenzen jeweils zwei benachbarte Kanäle 23 auf einer Seite. Zwischen den Kanalschultern 25 hat jeder Kanal eine Schlitzöffnung 26.

An den kurzen Rändern der Kolbenplatte 22 haben die Kanäle 23 Stirnöffnungen 27. Durch die Stirnöffnungen 27 hindurch sind die Kolbenköpfe 20 der Kolbenstangen 19 in die Kanäle 23 eingeschoben, sodass die Kanalschultern 25 formschlüssig in die Ringnuten 21 eingreifen. Infolgedessen sind die Kolben 16 durch vertikales Verlagern der Kolbenplatte 22 in den Zylindern 15 verlagerbar.

Von der Oberseite der Trägerplatte 3 steht ein Befestigungszapfen 28 einer Bajonett-Verbindung nach oben vor. Zentral im Befestigungszapfen 28 ist eine axial verlagerbare Gewindemutter 29 angeordnet, deren unteres Ende fest mit der Kolbenplatte 22 verbunden ist, um die Kolbenplatte 22 in Axialrichtung der Zylinder 15 zu verlagern. Auf Einzelheiten des Befestigungszapfens 28 wird weiter unten eingegangen.

Jedes Rohr 18 hat am unteren Ende einen radial vorstehenden, umlaufenden Stützvorsprung 30. Dieser ist als auf dem Rohr fixierter Stützring ausgebildet.

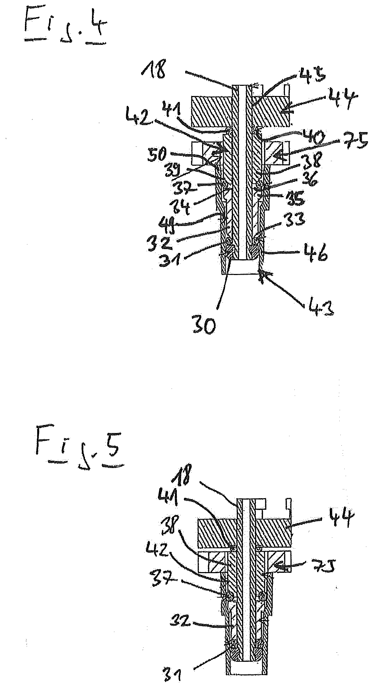

Gemäß Figur 4 ist auf dem Rohr 18 neben dem Stützvorsprung 30 ein erster O-Ring 31 aus einem elastomeren Material geführt. Über dem ersten O-Ring 31 ist auf dem Rohr 18 eine erste Hülse 32 mit einer ersten Verjüngung 33 am unteren Ende in Form einer umlaufenden Fase geführt. Die erste Hülse 32 ist mit der ersten Verjüngung 33 tiefer in den ersten O-Ring 31 einschiebbar. Die erste Hülse 32 hat am oberen ersten Ende 34 einen umlaufenden Bund 35, der wiederum eine ebene erste Stirnfläche 36 an der Oberseite aufweist. An der Oberseite der ersten Hülse liegt ein auf dem Rohr 18 geführter zweiter O-Ring 37 aus elastomerem Material an.

Darüber ist eine zweite Hülse 38 auf dem Rohr 18 geführt. Die zweite Hülse 38 hat unten eine zweite Verjüngung 39 in Form einer Fase. Die zweite Hülse 38 ist mit der zweiten Verjüngung 39 tiefer in den zweiten O-Ring 37 einschiebbar.

Die zweite Hülse 38 hat oben eine ebene zweite Stirnfläche 40. An der zweiten Stirnfläche 40 liegt ein auf dem Rohr 18 geführter Ausgleichsring 41 an.

Die erste und die zweite Hülse 32, 38 bestehen aus einem starren Material, z.B. aus einem Metall oder aus einem Kunststoff. Die ersten und zweiten O-Ringe 31, 37 bestehen aus einem elastomeren Material, z.B. Gummi, Silikon oder thermoplastisches Elastomer. Der Ausgleichsring 41 besteht aus einem elastomeren oder im Wesentlichen starren Material.

Die Rohre 18 bilden gemeinsam mit dem Stützvorsprung 30, den ersten und zweiten O-Ringen 31, 37 sowie den ersten und zweiten Hülsen 32, 38 einen Ansatz 42 zum Festklemmen von Pipettenspitzen 43.

Unterhalb der Bodenwand 5 und oberhalb der zweiten Hülse 38 ist eine Druckplatte 44 angeordnet. Diese hat erste Löcher 45, durch die die Rohre 18 der Ansätze 42 hindurchgeführt sind. Die ersten Löcher 45 sind so bemessen, dass die Druckplatte 44 mit dem Rand der ersten Löcher 45 an der Oberseite der Ausgleichsringe 41 anliegt.

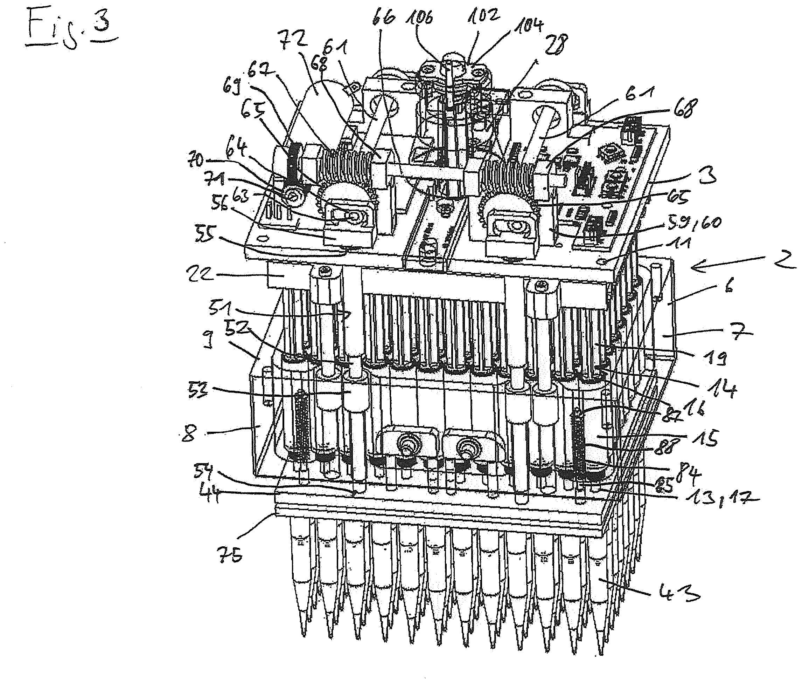

Gemäß Fig. 3 und 4 ist eine Pipettenspitze 43 ein Röhrchen 46 mit einer Spitzenöffnung 47 am unteren Ende und einer Aufstecköffnung 48 am oberen Ende. Angrenzend an die Aufstecköffnung 48 hat die Pipettenspitze 43 im Inneren einen Dichtsitz 49. Der Innendurchmesser und der Außendurchmesser einer Pipettenspitze 43 vergrößern sich im Allgemeinen von der Spitzenöffnung 47 zur Aufstecköffnung 48 hin. Im Beispiel hat die Pipettenspitze 43 mehrere konische und zylindrische Bereiche sowie eine zylindrische Erweiterung 50 in der Nähe des oberen Endes.

Gemäß Fig. 4 ist ein Ansatz 42 des Dosierkopfes 1 durch die Aufstecköffnung 48 in die Pipettenspitze 43 eingeführt. Die O-Ringe 31, 37 sind auf Höhe des Dichtsitzes 49 angeordnet. Gemäß Fig. 5 sind durch Verlagern der Druckplatte 44 nach unten die ersten und zweiten Hülsen 32, 38 nach unten verschoben, sodass die ersten und zweiten O-Ringe 31, 37 axial zusammengepresst und in Umfangsrichtung aufgeweitet sind. Hierdurch ist die aufgesteckte Pipettenspitze 43 abdichtend am Ansatz festgeklemmt. Durch Anheben der Druckplatte 44 ist die Verspannung der Pipettenspitze 43 auf dem Ansatz 42 lösbar.

Gemäß Figur 1 bis 3 ist zum Verlagern der Druckplatte 44 in vertikaler Richtung eine Verlagerungseinrichtung 51 vorhanden. Diese weist vier Führungsachsen 52 auf, die fest mit der Druckplatte 44 verbunden sind. Jede Führungsachse 52 ist unten in der Druckplatte 44 verschraubt. Jede Führungsachse 52 ist in einem Kugelumlaufgetriebe 53 reibungsarm geführt, das in dem Trägergehäuse 4 gehalten ist.

Die vier Führungsachsen 52 sind durch erste Durchgangslöcher 54 der Bodenwand 5 und zweite Durchgangslöcher 55 der Trägerplatte 3 hindurchgeführt und stehen oben über die Trägerplatte 3 hinaus. Dort ist jede Führungsachse 52 mit einem Kulissenelement 56 verbunden, das unten eine Kulissenbasis 57 hat, in die die Führungsachse 52 eingeschraubt ist. Auf der Oberseite der Kulissenbasis 57 hat jedes Kulissenelement 56 eine Kulisse 58 in Form eines Langloches.

Vier Kulissen 58 sind symmetrisch bezüglich des Befestigungszapfens 28 an den längsseitigen Rändern der Trägerplatte 3 angeordnet.

Auf der Oberseite der Trägerplatte 3 sind jeweils in zwei ersten Lagerböcken 59 mit darin gehaltenen ersten Kugellagern 60 erste Wellen 61 gelagert. Die ersten Wellen 61 tragen an ihren Enden jeweils eine Exzenterscheibe 62 mit einem darauf angeordneten Exzenter 63. Auf jedem Exzenter 63 ist ein zweites Kugellager 64 gelagert, das in eine Kulisse 58 eingreift.

Jede Exzenterscheibe 62 hat auf dem Umfang ein erstes Schneckenrad 65. Die beiden ersten Schneckenräder 65 sind in einer Ebene angeordnet.

In derselben Ebene befindet sich oberhalb der beiden Schneckenräder 65 eine zweite Welle 66, auf der zwei erste Schnecken 67 ausgebildet sind, die mit den Schneckenrädern 65 kämmen. Die zweite Welle 66 ist in zweiten Lagerböcken 68 gelagert, die am oberen Rand der ersten Lagerböcke 59 fixiert sind, die neben den Schneckenrädern 65 die ersten Wellen 61 lagern.

Am Ende der zweiten Welle 66 sitzt ein zweites Schneckenrad 69. Das zweite Schneckenrad 69 kämmt mit einer zweiten Schnecke 70, die auf der Motorwelle 71 eines Elektromotors 72 fixiert ist, die parallel zu den ersten Wellen 61 ausgerichtet ist.

Die Drehbewegung der Motorwelle 71 des Elektromotors 72 wird über die zweite Welle 66 auf die ersten Wellen 61 übertragen. Diese verlagern über das Exzentergetriebe 73 mit Exzentern 63 und Kulissen 58 und die Führungsachsen 52 die Druckplatte 44. Durch Antreiben des Elektromotors 72 in verschiedenen Richtungen kann somit die Druckplatte 44 angehoben oder abgesenkt werden. Hierdurch können die Pipettenspitzen 43 auf den Ansätzen 42 fixiert oder freigegeben werden.

Die erste Verlagerungseinrichtung 51 umfasst somit sämtliche Bauteile von den Führungsachsen 52 bis zum Elektromotor 72, welche die Verlagerung der Druckplatte 44 bewirken. Die erste Verlagerungseinrichtung 51 und die Druckplatte 44 bilden gemeinsam eine zweite Verlagerungseinrichtung 74 zum Verlagern der Hülsen 32, 38.

Unterhalb der Druckplatte 44 ist eine rechteckige Anschlagplatte 75 angeordnet. Die Anschlagplatte 75 hat zweite Löcher 76, in die die Ansätze 42 eingreifen. Die zweiten Löcher 76 sind so bemessen, dass die Ansätze 42 einschließlich der Stützvorsprünge 30, der ersten und zweiten O-Ringe 31, 37 und der ersten und zweiten Hülsen 32, 38 durch die zweiten Löcher 76 hindurchgesteckt werden können.

Die Anschlagplatte 75 ist in vertikaler Richtung verlagerbar. In einer Anschlagstellung, die sich weiter oben befindet, dient die Anschlagplatte 75 als Anschlag für das Aufstecken von Pipettenspitzen 43. In einer Abwurfstellung, die sich weiter unten befindet, drückt die Anschlagplatte 75 sämtliche Pipettenspitzen 43 von den Ansätzen 42 ab.

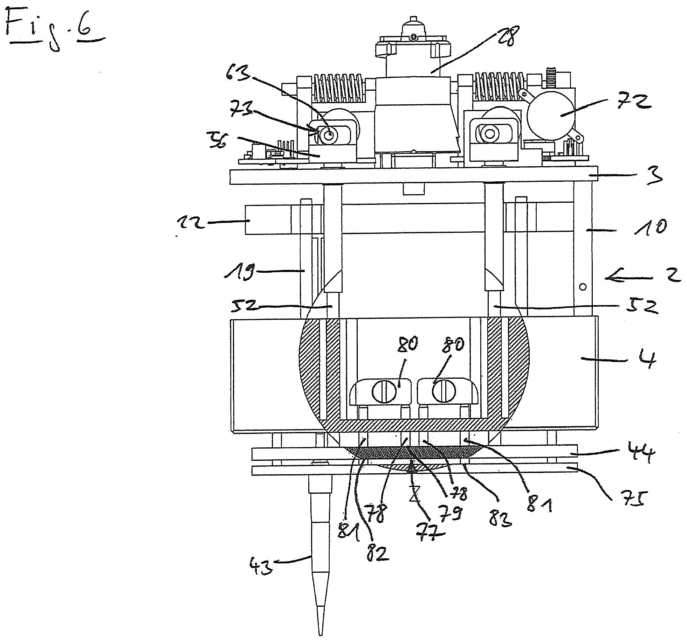

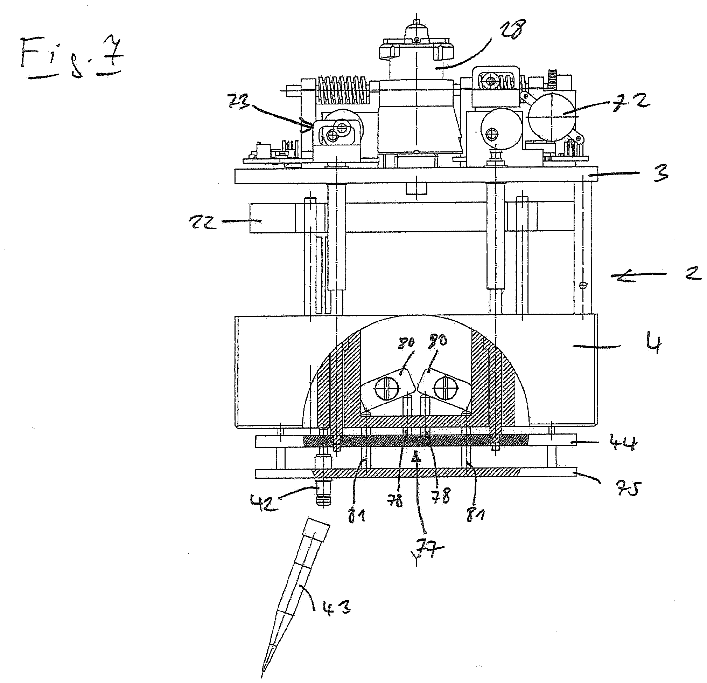

Gemäß Figur 6 und 7 ist zum Verlagern der Anschlagplatte 75 in vertikaler Richtung eine dritte Verlagerungseinrichtung 77 vorhanden. Diese umfasst Übertragungsachsen 78, wobei von jeder Längsseite der Druckplatte 44 zwei Übertragungsachsen 78 hochstehen. Die Übertragungsachsen 78 sind mit ihren unteren Enden in Gewindelöcher 79 der Druckplatte 44 eingeschraubt.

Die oberen Enden der Übertragungsachsen 78 liegen lose an den Enden von Kipphebeln 80 an, die an den Innenseiten des Trägergehäuses 4 schwenkbar gelagert sind. Die anderen Enden der Kipphebel 80 liegen lose an den oberen Enden von Abwurfachsen 81 an, die durch dritte Durchgangslöcher 82 der Druckplatte 44 hindurchgeführt sind und deren unteren Enden in vierten Gewindebohrungen 83 der Anschlagplatte 75 verschraubt sind.

Gemäß Fig. 3 ist die Anschlagplatte 75 über vier Federelemente 84 an der Bodenwand 5 des Trägergehäuses 4 abgestützt. Die Federelemente 84 weisen jeweils eine Führungsstange 85 auf, die an ihrem unteren Ende in eine fünfte Gewindebohrung 86 der Anschlagplatte 75 eingeschraubt ist. Am oberen Ende der Führungsstange 85 ist ein Teller 87 fixiert. Zwischen dem Teller 87 und der Oberseite der Bodenwand 5 ist auf der Führungsstange 85 eine vorgespannte erste Schraubenfeder 88 geführt, welche die Anschlagplatte 75 nach oben drückt. Die Verlagerung der Anschlagplatte 75 nach oben ist durch Abstützung der Anschlagplatte 75 an der Druckplatte 44 über die durch die Durchgangslöcher 82 der Druckplatte 44 hindurchgeführten Abwurfachsen 81, die Kipphebel 80 und die von der Druckplatte 44 hochstehenden Übertragungsachsen 78 begrenzt.

Beim Aufstecken von Pipettenspitzen 43 befindet sich die Druckplatte 44 in der Freigabestellung und die Anschlagplatte 75 in der Anschlagstellung gemäß Fig. 4 und 6. Die Pipettenspitzen 43 sind bis zum Anliegen an der Anschlagplatte 75 auf die Ansätze 42 aufschiebbar.

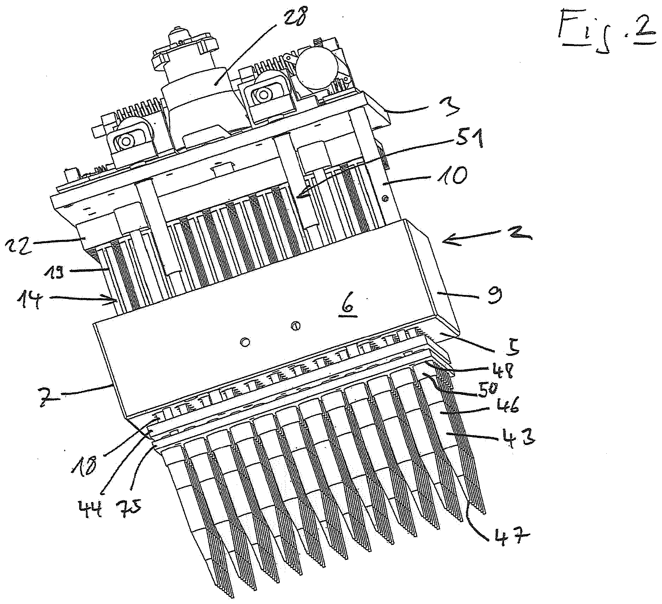

Über das Exzentergetriebe 73 und die Führungsachsen 52 wird die Druckplatte 44 nach unten bis in die Klemmstellung verlagert und hierdurch die Pipettenspitzen 43 auf den Ansätzen 42 festgeklemmt. Hierbei wird die Anschlagplatte 75 durch eine Anschlageinrichtung mit von der Bodenwand 5 nach unten vorstehenden Anschlagelementen daran gehindert, aus der Anschlagstellung nach oben auszuweichen. Diese Situation ist in Fig. 2, 3, 5 und 6 gezeigt.

Zum Abwerfen von Pipettenspitzen wird die Druckplatte 44 nach oben bis in die Freigabestellung verlagert. Hierbei wird die Verspannung der Pipettenspitzen 43 auf den Ansätzen 42 gelöst. Zugleich kippen die Übertragungsachsen 78 die Kipphebel 80 und letztere verlagern die Abwurfachsen 81 und damit die Anschlagplatte 75 nach unten bis in die Abwurfstellung. Hierdurch werden die Pipettenspitzen 43 von den Ansätzen 42 abgestreift. Diese Situation ist in Fig. 7 gezeigt.

Für die erneute Aufnahme von Pipettenspitzen 43 werden die Führungsachsen 52 angehoben, bis die Druckplatte 44 die Freigabestellung und die Anschlagplatte 75 die Anschlagstellung von Fig. 1 erreichen.

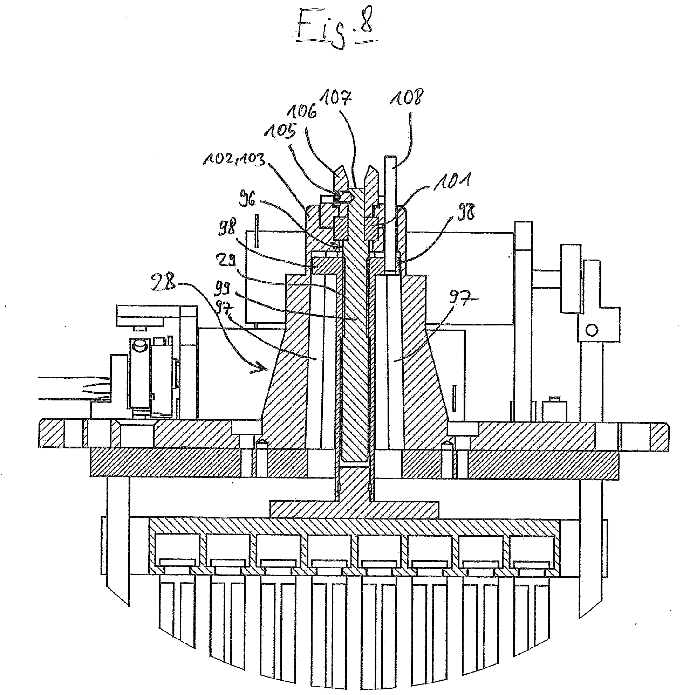

Gemäß Fig. 1 bis 3 und 8 hat der Befestigungszapfen 28 oben einen zylindrischen oberen Zapfenabschnitt 91. Der obere Zapfenabschnitt 91 trägt am Außenumfang zwei um 180° zueinander versetzte, radial nach außen vorspringende, jeweils teilweise umlaufende Verbindungselemente 92, um eine Bajonett-Verbindung 93 zu bilden. Die Verbindungselemente 92 haben an der Unterseite eine leichte Gewindesteigung zum Verspannen mit einem dazu passenden Verbindungselement in einer Zapfenaufnahme einer Bajonett-Verbindung.

Angrenzend an den oberen Zapfenabschnitt 91 hat der Befestigungszapfen 28 einen zylindrischen mittleren Zapfenabschnitt 94 mit einem größeren Außendurchmesser als der obere Zapfenabschnitt 91.

Darunter hat der Befestigungszapfen 28 einen konisch sich nach unten erweiternden, unteren Zapfenabschnitt 95. Der untere Zapfenabschnitt 95 ist an seiner Basis auf der Oberseite der Trägerplatte 3 fixiert.

In Längsrichtung des Befestigungszapfens 28 erstreckt sich eine zentrale Bohrung 96. Diese hat zwei diametral einander gegenüberliegende Längsnuten 97.

In die zentrale Bohrung 96 ist die hülsenförmige Gewindemutter 29 eingesetzt, die mit zwei radial vorspringenden Flügeln 98 an ihrem oberen Ende in den Längsnuten 97 geführt ist.

Ferner ist in die Gewindemutter 29 eine Spindel 99 eingeschraubt. Diese hat oberhalb ihres Gewindes einen vorstehenden Lagerzapfen 100, an dem sie in einem dritten Kugellager 101 gelagert ist. Das dritte Kugellager 101 ist in einer Lagerbuchse 102 eines Lagerträgers 103 gehalten, der zwei diametral von den Seiten vorstehende Laschen 104 hat, die auf dem oberen Rand des oberen Zapfenabschnittes 91 aufliegen und daran mittels Schrauben fixiert sind.

An einem über das dritte Kugellager 101 hinausstehenden Teil des Lagerzapfens 100 ist mittels eines radialen Gewindestiftes 105 ein Mitnehmer 106 drehfest fixiert, der an seiner oberen Stirnseite einen radial und axial erstrecken Schlitz 107 zum Einführen eines klinkenförmigen Antriebsorganes aufweist.

Die Spindel 99 stützt sich an der Stirnseite des dritten Kugellagers 101 ab. Der Mitnehmer 106 stützt sich an der Oberseite des Lagerträgers 103 ab. Die Spindel 99 ist hierdurch axial nicht verlagerbar im Befestigungszapfen 28 gehalten.

In einem Flügel der Gewindemutter 29 ist ein Zylinderstift 108 fixiert, der parallel zur Mittelachse der Gewindemutter 29 ausgerichtet durch eine Nut 109 des Lagerträgers 103 hindurchgeführt ist und oben aus dem Befestigungszapfen 28 heraussteht.

Durch Drehen des Mitnehmers 106 verschiebt die axial im Befestigungszapfen 28 festgehaltene Spindel 99 die unverdrehbar in dem Befestigungszapfen 28 geführte Gewindemutter 29 in axialer Richtung. Hierdurch wird die Kolbenplatte 22 verlagert und die Kolben 16 in den Zylindern 15 verschoben. Durch Drehen des Mitnehmers 106 in unterschiedlichen Richtungen sind die Kolben 16 in verschiedenen Richtungen in den Zylindern 15 verschiebbar. Durch Abtasten der Lage des Zylinderstiftes 108 ist es möglich, die jeweilige Stellung der Kolben 16 in den Zylindern 15 zu ermitteln.

Der Befestigungszapfen 28 und der darin integrierte Antrieb mit Gewindemutter 29 und Spindel 99 entsprechen den Ausführungsbeispielen von Fig. 1 bis 4 sowie 6 gemäß EP 1 407 861 B1. Die diesbezügliche Beschreibung wird durch Bezugnahme in die vorliegende Anmeldung einbezogen.

Ein Dosierautomat oder Laborautomat ist mit einer komplementären Zapfenaufnahme einer Bajonett-Verbindung versehen, die mit dem Befestigungszapfen verbindbar ist. Vorzugsweise entspricht das komplementäre Verbindungsteil dem Werkzeughalter gemäß Fig. 7 bis 10 der vorgenannten Patentschrift. Die diesbezügliche Beschreibung wird durch Bezugnahme in die vorliegende Anmeldung einbezogen.

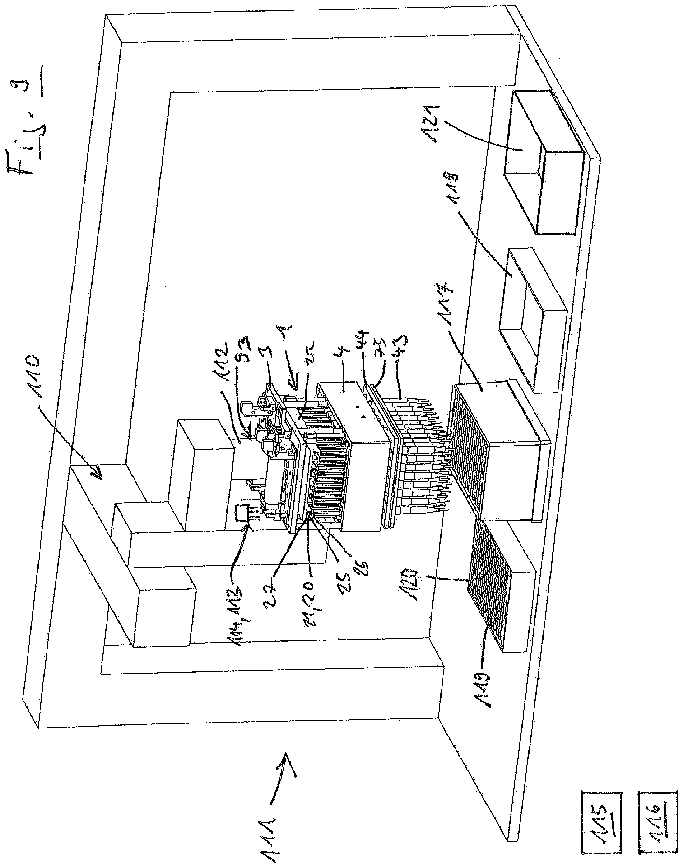

Gemäß Fig. 9 ist der Dosierkopf 1 mit einem Dreiachsübertrager 110 eines Dosierautomaten 111 gekoppelt. Hierfür ist der Befestigungszapfen 28 in einer entsprechenden Zapfenaufnahme 112 am Dreiachsübertrager 110 gehalten. Zusätzliche Einrichtungen zum Koppeln erster Steckverbindungen 113 und zweiter Steckverbindungen 114 einer elektrischen Spannungsversorgung 115 des Dosierautomaten für den Elektromotor 72 und einer elektrischen Steuerungseinrichtung 116 des Dosierautomaten 111 mit dem Dosierkopf 1 sind ebenfalls am Dreiachsübertrager 110 vorhanden. Über die zweiten Steckverbindungen 114 werden beispielsweise Signale eines die Drehstellung der Motorwelle 71 erfassenden Drehwinkelgebers an die Steuerungseinrichtung 110 und Motorsteuerungssignale von der Steuerungseinrichtung 116 an eine Motorsteuerung auf den Dosierkopf 1 übertragen.

Mit Hilfe des Dosierautomaten 111 können automatisch Pipettenspitzen 43 aufgenommen und abgeworfen werden, sowie Flüssigkeiten dosiert werden. In Fig. 9 ist der Dosierkopf 1 nach der Aufnahme von Pipettenspitzen 43 aus einem Halter 117 mit den aufgeklemmten Pipettenspitzen 43 angehoben. Der Dosierkopf 1 kann für die Aufnahme von Flüssigkeiten aus einem Vorlagenbehälter 118 so verfahren werden, dass die Spitzenöffnungen in den Vorlagenbehälter 118 eintauchen. Nach der Aufnahme von Flüssigkeit kann der Dosierkopf 1 mit den Pipettenspitzen 43 in die Aufnahmen ("wells") 119 einer Mikrotiterplatte 120 hineingefahren werden, um Flüssigkeit in die Aufnahmen abzugeben. In der Mikrotiterplatte 120 kann die Flüssigkeit weiterbehandelt werden, z.B. mit weiteren Flüssigkeiten gemischt, physikalisch, chemisch oder biochemisch behandelt oder analysiert werden. Schließlich kann der Dosierkopf 1 über eine Abfallbehälter 121 verfahren und die Pipettenspitzen 43 in den Abfallbehälter 121 abgeworfen werden.

Nachfolgend sind Dosierköpfe von Handpipetten beschrieben.

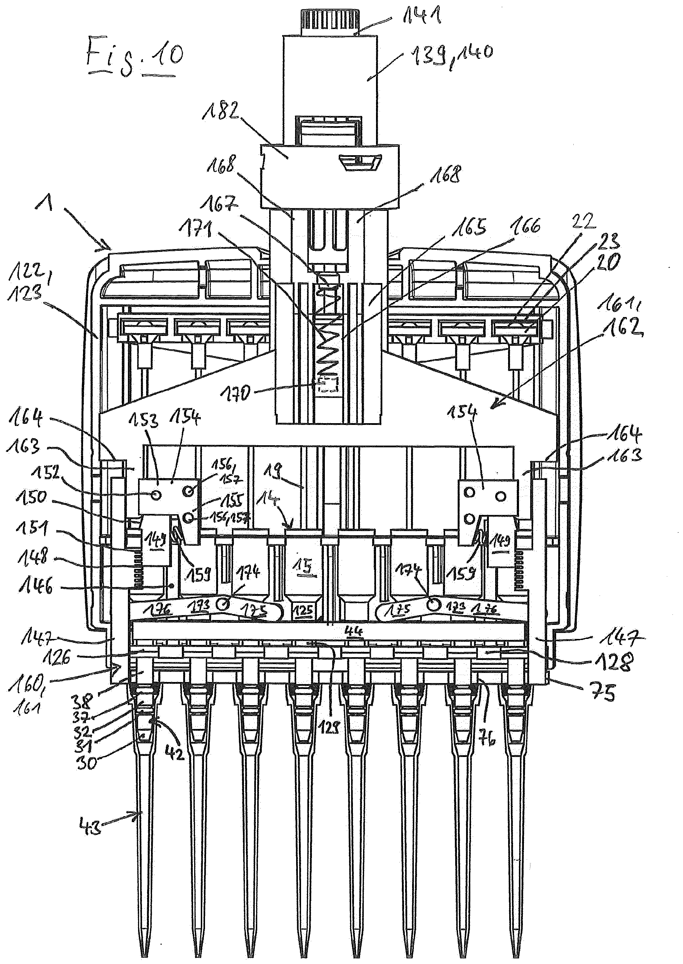

Gemäß Fig. 10 bis 17 hat der Dosierkopf 1 ein erstes Gehäuse 122, das aus einer vorderen und einer hinteren Gehäuseschale 123, 124 gebildet ist, die in einer vertikalen Ebene zusammengefügt sind. In Fig. 10 bis 15 ist die hintere Gehäuseschale 124 entfernt.

In dem Dosierkopf 1 sind acht parallele Kolben-Zylinder-Einheiten 14 in einer Reihe angeordnet. Jede Kolben-Zylinder-Einheit 14 hat einen Zylinder 15, in dem ein Kolben 16 verschiebbar angeordnet ist.

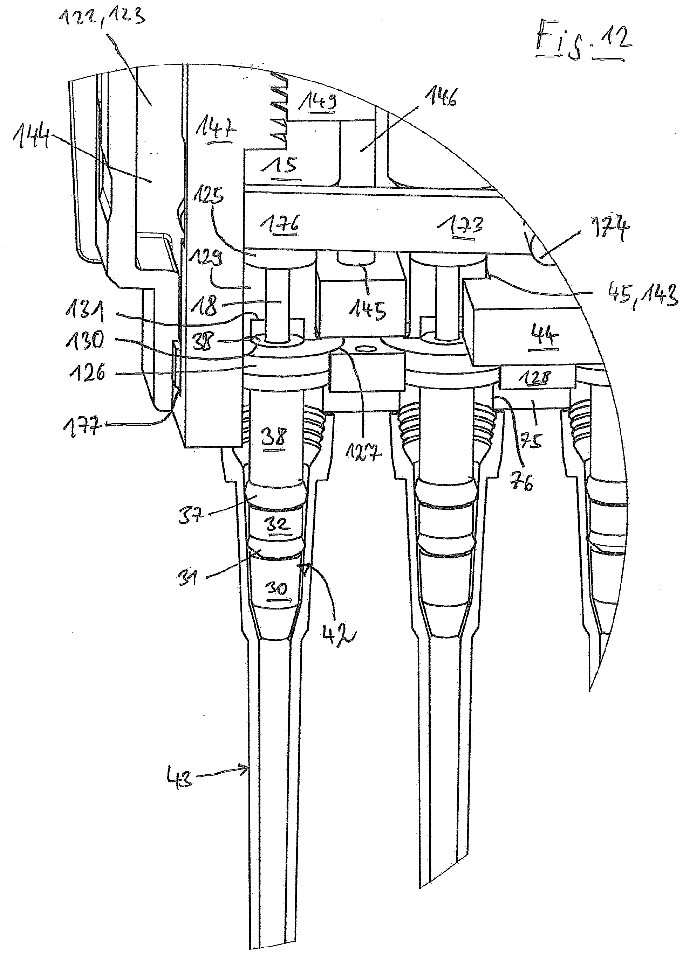

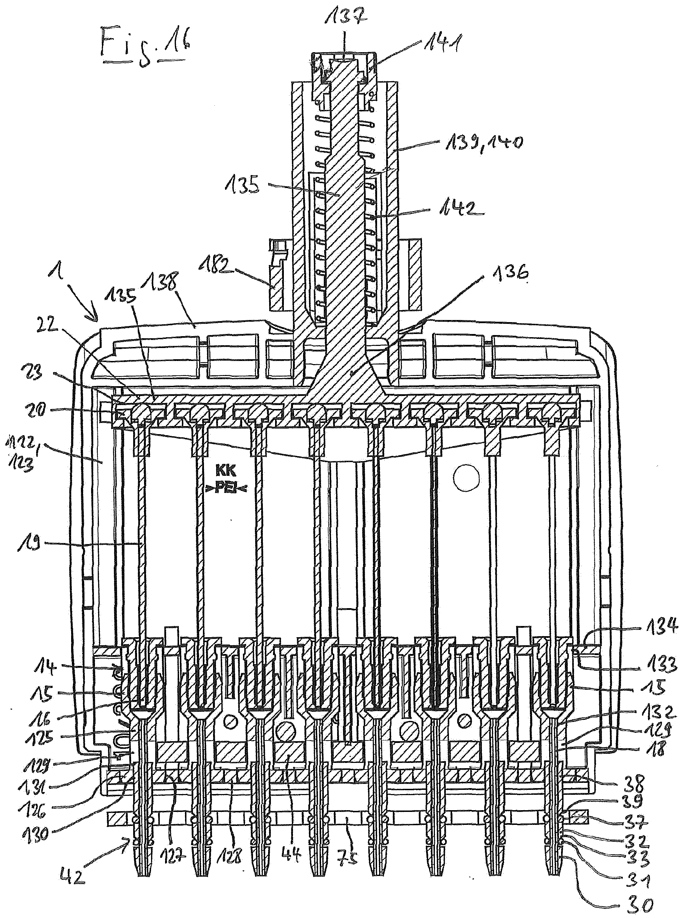

Gemäß Fig. 12 und 16 ist jeder Zylinder 15 unten über einen Zapfen 125 mit einer Kreisscheibe 126 verbunden, die sich nach unten konisch verjüngt. Jede Kreisscheibe 126 ist von oben in ein entsprechend geformtes viertes Durchgangsloch 127 einer horizontalen unteren Gehäusewand 128 des Gehäuses 122 eingesetzt und darin fixiert, z.B. durch Einklemmen.

Jeder Zapfen 125 weist auf der Rückseite oberhalb der Kreisscheibe 126 eine Abflachung 129 auf.

Jede Kreisscheibe hat ein vertikales, zentrales fünftes Durchgangsloch 130. Ein Fortsatz 131 des fünften Durchgangslochs 130 erstreckt sich bis in den abgeflachten Teil des Zapfens 125 hinein. Durch die Abflachung 129 ist nur eine Hälfte des fünften Durchgangslochs 130 in den Zapfen 125 hinein fortgesetzt.

Vom unteren Ende jedes Zylinders 15 aus erstreckt sich in einem vertikalen Durchgangskanal 132 des Zapfens 125 ein Rohr 18, das im Bereich der Abflachung 129 freiliegt. Das Rohr 18 erstreckt sich durch das fünfte Durchgangsloch 130 hindurch und steht nach unten von der unteren Gehäusewand 128 vor.

Jedes Rohr hat am unteren Ende einen umlaufenden Stützvorsprung 30. Dieser ist z.B. als auf dem Rohr 18 fixierte konische Hülse ausgebildet.

Darüber ist ein elastomerer erster O-Ring 31 auf dem Rohr 18 angeordnet. Darüber befindet sich auf dem Rohr 18 eine erste Hülse 32, die eine umlaufende erste Verjüngung 33 am unteren Ende aufweist. Darüber sitzt auf dem Rohr 18 ein elastomerer zweiter O-Ring 37. Darüber ist wiederum eine zweite Hülse 38 auf dem Rohr 18 geführt, die am unteren Ende eine umlaufende zweite Verjüngung 39 aufweist. Die zweite Hülse 38 greift in das fünfte Durchgangsloch 130 der Kreisscheibe 126 ein.

Die zweite Hülse 38 ist bis zum oberen Ende des Fortsatzes 131 der fünften Durchgangsbohrung 130 nach oben hochschiebbar. In der hochgeschobenen Stellung liegt eine Hälfte der zweiten Hülse 38 neben der Abflachung 129 frei.

Jedes Rohr 18 mit Stützvorsprung 30, ersten und zweiten Hülsen 32, 38 sowie ersten und zweiten O-Ringen 31, 37 bildet einen Ansatz 42.

Jeder Zylinder 15 ist an seinem oberen Ende in einem sechsten Durchgangsloch 133 einer horizontalen Stützplatte 134 der vorderen Gehäuseschale 123 geführt.

Jeder Kolben 16 trägt eine Kolbenstange 19, die am oberen Ende einen Kolbenkopf 20 aufweist. Die Kolbenköpfe 20 sind in Kanälen 23 einer horizontal ausgerichteten streifenförmigen Kolbenplatte 22 gehalten. Von der streifenförmigen Kolbenplatte 22 steht eine Stange 135 hoch. Die streifenförmige Kolbenplatte 22 und die Stange 135 sind Bestandteile des Kolbenbetätigers 136. Der Kolbenbetätiger 136 bzw. die Stange 135 weist oben eine Kontaktfläche 137 für das untere Ende einer Hubstange eines Pipettenoberteils auf.

Von einer horizontalen oberen Gehäusewand 138 steht nach oben ein hülsenförmiges Halteelement 139 vor, durch das sich die Stange 137 hindurch erstreckt. Das Halteelement 139 weist erste Mittel zum lösbaren Verbinden 140 mit einem Pipettenoberteil auf.

Am oberen Ende der Stange ist lösbar ein hülsenförmiges Widerlagerelement 141 gehalten. Zwischen dem hülsenförmigen Halteelement 139 und der Stange 135 ist eine zweite Schraubenfeder 142 angeordnet, die sich unten an einer oberen Gehäusewand 138 des ersten Gehäuses 122 und oben am Widerlagerelement 141 unter Vorspannung abstützt.

Durch Drücken gegen die Kontaktfläche 137 von oben ist die Stange 135 entgegen der Wirkung der zweiten Schraubenfeder 142 nach unten und damit die Kolben 16 tiefer in die Zylinder 15 hinein verlagerbar. Nach Entlasten der Kontaktfläche 137 wird die Stange 135 und damit die Kolben 16 durch die zweite Schraubenfeder 142 in die ursprüngliche Position zurückverlagert.

Die zuvor beschriebenen Bauteile des Dosierkopfes 1 sind an der vorderen Gehäuseschale 123 gehalten.

Zudem weist der Dosierkopf 1 eine horizontale Druckplatte 44 auf. Die Druckplatte 44 greift in die Abflachungen 129 der Zapfen 125 ein und liegt mit ihrer Unterseite auf den Oberseiten der zweiten Hülsen 38 auf (Fig. 12). Im Bereich der Zapfen 125 weist die Druckplatte 44 erste Löcher 45 in Form von seitlichen Ausnehmungen 143 auf, durch die hindurch sich die Rohre 18 erstrecken. Die Druckplatte 44 erstreckt sich seitlich der Zapfen 125 zur vorderen Gehäusewand 144 des Dosierkopfes 1 hin. Die Druckplatte 44 weist vertikale Führungsbohrungen 145 auf, die an vertikalen Führungsstiften 146 im Gehäuse 122 geführt sind.

Unterhalb der horizontalen unteren Gehäusewand 128 ist eine horizontale Anschlagplatte 75 angeordnet. Diese weist zweite Löcher 76 auf, wobei zentral durch jedes zweite Loch 76 hindurch ein Ansatz 42 erstreckt ist.

Von den beiden Enden der Anschlagplatte 75 stehen vertikal nach oben Zahnstangen 147 vor. Die Zahnstangen 147 weisen erste Zahnungen 148 an seitlich fahnenartig vorstehenden Abschnitten auf. Die Zahnstangen 147 sind fest mit der Anschlagplatte 75 verbunden.

Neben den ersten Zahnungen 148 der Zahnstangen 147 sind schwenkbare Zahnklinken 149 im Gehäuse 122 gelagert. Jede Zahnklinke 149 ist prismenförmig mit einer rechteckigen Grundfläche und einer Anschrägung auf einer Seite, die ein erstes Keilelement 150 bildet (Fig. 10, 13, 14, 15). Jedes erste Keilelement 150 springt mit seinem unteren Ende etwas bezüglich des angrenzenden seitlichen Randes der Zahnklinke 149 vor. Auf der Seite des ersten Keilelements 150 weist jede Zahnklinke eine zweite Zahnung 151 auf. Diese Seite ist der ersten Zahnung 148 der benachbarten Zahnstange 147 zugewandt.

Jede Zahnklinke 149 ist auf einer horizontalen ersten Achse 152 gelagert, die von einem ersten Schenkel 153 eines winkelförmigen Lagerträgers 154 vorsteht. In dem zweiten Schenkel 155 weist der Lagerträger 154 Augen 156 zum Fixieren auf Haltestiften 157 auf, die von der hinteren Gehäusewand 158 des ersten Gehäuses 122 nach innen vorstehen. An dem zweiten Schenkel 155 stützt sich eine dritte Schraubenfeder 159 mit einem Ende ab. Das andere Ende der dritten Schraubenfeder 159 ist in einer Sackbohrung an einer Schmalseite der an demselben Lagerträger 154 gelagerten Zahnklinke 149 gelagert. Durch die dritte Schraubenfeder 159 ist die Zahnklinke 149 zur benachbarten Zahnstange 147 hin vorgespannt.

Die Anschlagplatte 75 und die Zahnstangen 147 sind ein erstes Abwerferteil 160 eines Abwerfers 161 (Fig. 10). Darüber hinaus umfasst der Abwerfer 161 ein zweites Abwerferteil 162, das als Traverse ausgebildet ist. Vom horizontalen unteren Rand des zweiten Abwerferteils 162 stehen vertikal nach unten zwei Abwerferstangen 163 vor. Die Abwerferstangen sind nahe den seitlichen Rändern des zweiten Abwerferteils 162 angeordnet. Dieses hat am unteren Rand neben den Abwerferstangen 163 oberhalb der Zahnstangen 147 Auskragungen 164.

Zentral vom oberen Rand des zweiten Abwerferteils 162 steht ein Betätigungselement 165 in Form eines Schafts nach oben vor. Dieser hat eine flache, mit der Vorderseite des zweiten Abwerferteils 162 fluchtende Vorderseite und eine bezüglich der Rückseite des oberen Abwerferteils 162 etwas zylindrisch nach außen vorgewölbte Rückseite. In der vorgewölbten Rückseite hat das Betätigungselement eine vertikal erstreckte erste Vertiefung 166, die oben von einem ersten Widerlager 167 begrenzt ist.

Das Betätigungselement 165 hat oben zwei nach oben vorstehende, streifenförmige Übertragungselemente 168, die in einem horizontalen Schnitt hohlzylindrisch sind.

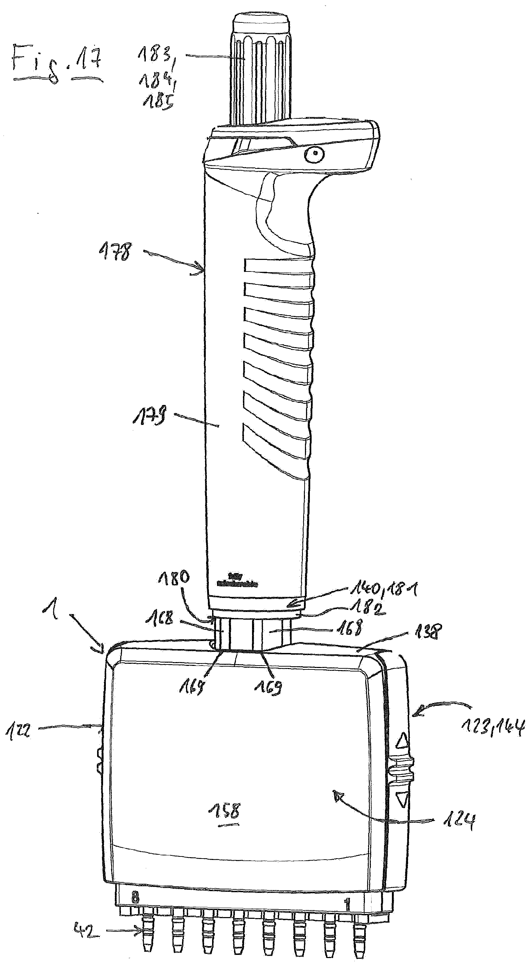

Das Betätigungselement 165 ist mit den Übertragungselementen 168 durch bogenförmige Schlitze 169 in der horizontalen oberen Gehäusewand 138 neben dem Halteelement 139 hindurchgeführt (Fig. 17).

Die hintere Gehäusewand 158 weist auf der Innenseite ein zweites Widerlager 170 auf. Dieses ist zusätzlich in Fig. 10 eingezeichnet, obgleich diese den Dosierkopf 1 ohne hintere Gehäusewand zeigt. Zwischen dem zweiten Widerlager 170 und den ersten Widerlager 167 des Betätigungselementes ist in der Vertiefung 166 eine vierte Schraubenfeder 171 unter Vorspannung gehalten. Die vierte Schraubenfeder 171 belastet den zweiten Abwerferteil 162, sodass er in die Stellung von Fig. 1 nach oben gedrückt wird.

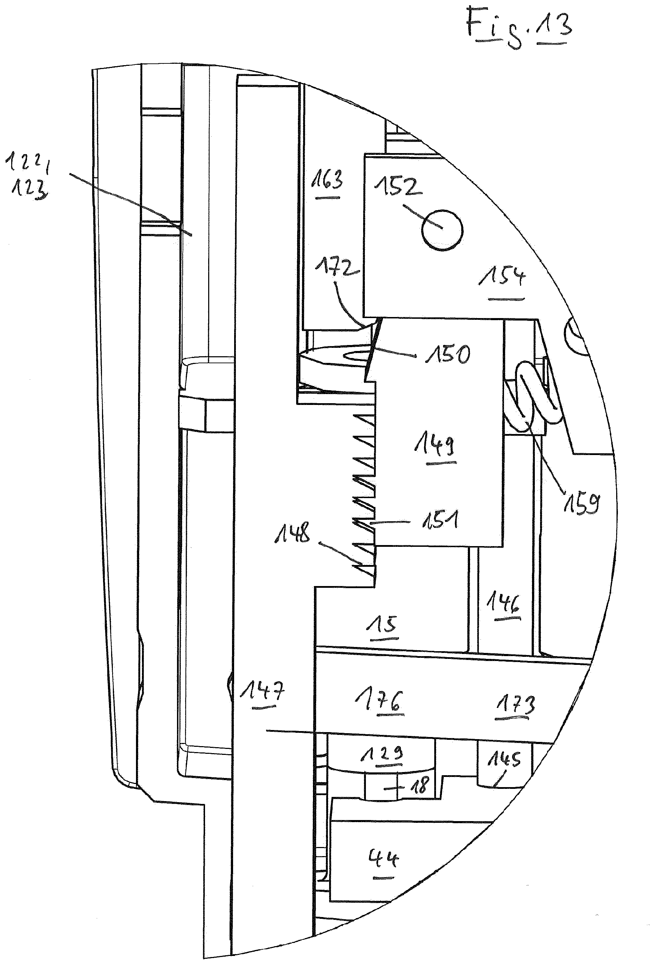

Die Abwerferstangen 163 sind unten an den einander zugewandten Seiten mit zweiten Keilelementen 172 in Form von Radien oder Anschrägungen versehen (Fig. 13). Bei einer Verlagerung des zweiten Abwerferteils 162 nach unten gleiten die Abwerferstangen 163 mit ihren zweiten Keilelementen 172 über die ersten Keilelemente 150 der Zahnklinken 149.

Ferner sind zwei Winkelhebel 173 auf zwei horizontalen zweiten Achsen 174 schwenkbar gelagert, die von der Innenseite der hinteren Gehäusewand 158 vorstehen (Fig. 10). Jeder Winkelhebel 173 hat einen kurzen ersten Hebelarm 175, der mit einem Radius an seinem freien Ende auf der Oberseite der Druckplatte 44 anliegt. Jeder Winkelhebel 173 hat einen langen zweiten Hebelarm 176, der mit einem Radius an seinem freien Ende auf dem unteren Rand einer horizontal erstreckten zweiten Vertiefung 177 in der Vorderseite einer Zahnstange 147 aufsetzt (Fig. 12).

Gemäß Fig. 17 ist der Dosierkopf 1 mit einem Pipettenoberteil 178 verbunden. Das Pipettenoberteil 178 hat ein zweites Gehäuse 179, das als Griff ausgeformt und im Wesentlichen stielförmig ist. Am unteren Ende hat das zweite Gehäuse 179 eine Gehäuseöffnung 180, in die das hülsenförmige Halteelement 139 eingesetzt ist. Im Inneren des Gehäuseoberteils 179 befinden sich zweite Mittel zum lösbaren Verbinden 181, die mit den ersten Mitteln zum lösbaren Verbinden 140 des hülsenförmigen Halteelements 139 lösbar verbunden sind. Ferner weist das Pipettenoberteil 138 eine Abwerferhülse 182 auf, die unten aus der Gehäuseöffnung 180 etwas hervorsteht. Die Übertragungselemente 168 des Betätigungselementes 165 liegen mit ihren oberen Rändern am unteren Rand der Abwerferhülse 182 an.

Das Pipettenoberteil 178 umfasst eine erste Antriebseinrichtung 183 zum Verlagern der Kolben 16 in den Zylindern 15 des Dosierkopfes 1 und eine zweite Antriebseinrichtung 184 zum Verlagern des Abwerfers 161.

Die erste Antriebseinrichtung 183 und die zweite Antriebseinrichtung 184 weisen einen Dosierknopf 185 auf, der vom oberen Ende des zweiten Gehäuses 179 vertikal nach oben vorsteht. Der Dosierknopf 185 ist durch Betätigung mit dem Daumen vertikal nach unten tiefer in das zweite Gehäuse 179 hinein verlagerbar. Der Dosierknopf 185 ist an eine Hubstange gekoppelt, die mit ihrem unteren Ende an der Kontaktfläche 137 der Stange 135 des Dosierkopfs 1 anliegt.

Zu Beginn des Eindrückens des Dosierknopfs werden die Kolben 16 in den Zylindem 15 verlagert, um einen Dosierhub durchzuführen. Der Dosierhub ist durch Drehen des Dosierknopfs 185 einstellbar. Die Verlagerung erfolgt entgegen der Wirkung einer Rückstellfeder, sodass die Hubstange nach Entlastung des Dosierknopfes 185 selbsttätig zurück nach oben verlagert wird. Bei Entlastung des Dosierknopfes 185 werden durch die zweite Schraubenfeder 142 auch die Kolben 16 in den Zylindem 15 selbsttätig zurück nach oben verlagert. Durch Eindrücken und Loslassen des Dosierknopfes 185 ist Luft aus der Kolben-Zylinder-Einheit 14 ausdrückbar bzw. einsaugbar, um Pipettenspitzen 43 zu entleeren bzw. zu befüllen.

Nach Erschöpfung des eingestellten Dosierhubs ist entgegen der Wirkung einer weiteren im zweiten Gehäuse 179 angeordneten Feder durch weiteres Eindrücken des Dosierknopfes 185 ein Überhub ausführbar, um Restflüssigkeit aus den Pipettenspitzen 43 auszublasen.

Nach Ausführung des Überhubes ist durch weiteres Eindrücken des Dosierknopfes 185 die Abwerferhülse 182 nach unten verlagerbar, um den Abwerfer 161 zu betätigen. Da sowohl die Verdrängung von Flüssigkeit als auch das Abwerfen von Pipettenspitzen mit demselben Dosierknopf 185 steuerbar sind, handelt es sich um eine Einknopfpipette.

Hinsichtlich weiterer möglicher Ausgestaltungen des Pipettenoberteils 178 wird Bezug genommen auf die Abschnitte 53 bis 62 der EP 2 735 369 B1, deren Inhalt hiermit in diese Anmeldung aufgenommen wird.

Der Benutzer umgreift mit einer Hand das zweite Gehäuse 179, sodass er den Daumen gegen das obere Ende des Dosierknopfes 185 drücken kann. Der Dosierkopf 185 wird mit den Ansätzen 42 in die Aufstecköffnungen 48 von Pipettenspitzen 43 eingeführt, die in einem Halter bereitgehalten werden. Anschläge an den Zahnstangen 147 verhindern eine Verlagerung der Anschlagplatte 75 nach unten.

Gemäß Fig. 10 verlagern die Pipettenspitzen 43 beim weiteren Aufschieben auf die Ansätze 42 die Anschlagplatte 75 mit nach oben. Hierdurch kommen die ersten Zahnungen 148 der Zahnstangen 147 mit den zweiten Zahnungen 151 der Zahnklinken 149 in Eingriff. Die Winkelhebel 173 übertragen die Bewegung der Zahnstangen 147 nach oben auf die Druckplatte 44, sodass diese nach unten verlagert wird. Durch die Verlagerung der Druckplatte 44 nach unten werden die Hülsen 32, 38 nach unten verlagert und die O-Ringe 31, 37 radial aufgeweitet, wodurch die Pipettenspitzen 43 auf den Ansätzen 42 festgeklemmt werden.

Beim weiteren Aufschieben der Pipettenspitzen 43 wandern die Zahnstangen 147 entlang der Rastklinken 149 weiter nach oben, sodass diese wiederholt einrasten und die Anschlagplatte 75 nicht in die Ausgangslage von Fig. 10 zurückfällt.

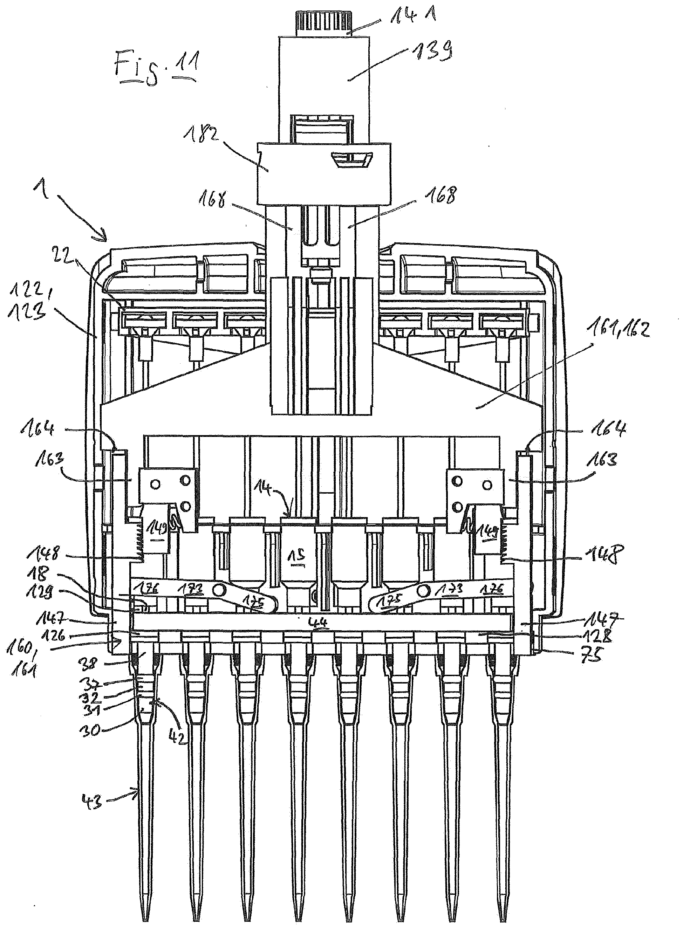

Das Aufklemmen der Pipettenspitzen 43 wird durch Anlage der Anschlagplatte 75 an der unteren Gehäusewand 128 begrenzt. Dies ist in Fig. 11 gezeigt. In dieser Stellung sind die O-Ringe 31, 37 maximal aufgeweitet und die Pipettenspitzen 43 mit der größten Kraft festgeklemmt.

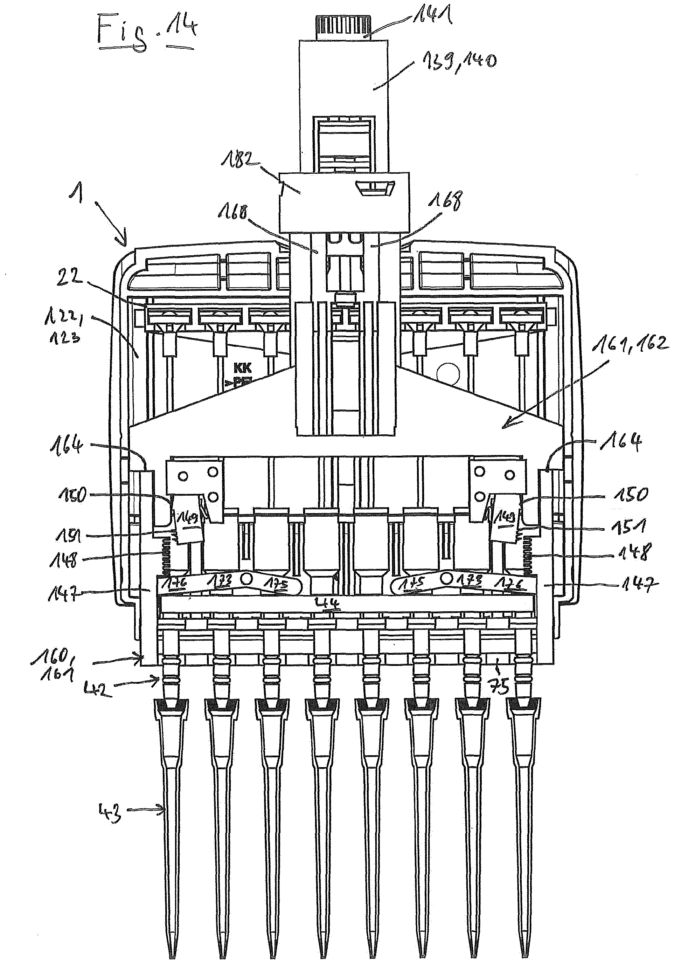

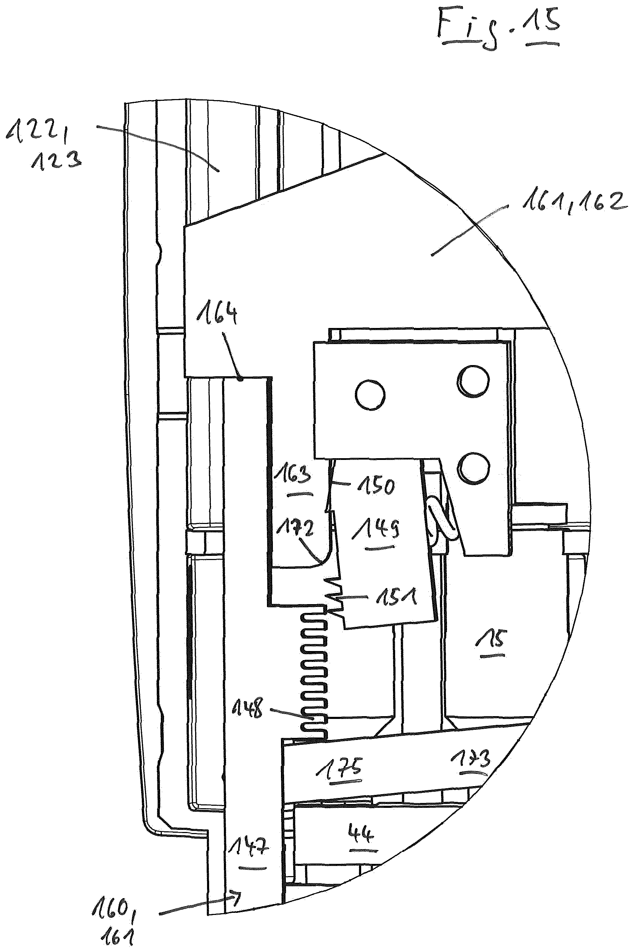

Danach werden unter Betätigung des Dosierknopfes 185 Flüssigkeiten in die Pipettenspitzen 43 aufgenommen und daraus abgegeben (Fig. 17). Wenn die Dosierungen durchgeführt sind, können die Pipettenspitzen 43 gemeinsam abgeworfen werden. Hierfür wird der Dosierknopf 185 maximal eingedrückt, sodass die Abwerferhülse 182 die Übertragungselemente 168 des zweiten Abwerferteils 162 nach unten drückt und die Abwerferstangen 163 gegen die ersten Keilelemente 150 drücken und die Zahnklinken 149 entrasten (Fig. 14, 15). Beim weiteren Verlagern des zweiten Abwerferteils 162 nach unten drücken die seitlichen Auskragungen 164 gegen die oberen Enden der Zahnstangen 147 und schieben diese nach unten in die Ausgangsstellung von Fig. 10. Hierbei wird die Druckplatte 44 entlastet und die Anschlagplatte 75 streift die Pipettenspitzen 43 von den Ansätzen 42 ab.

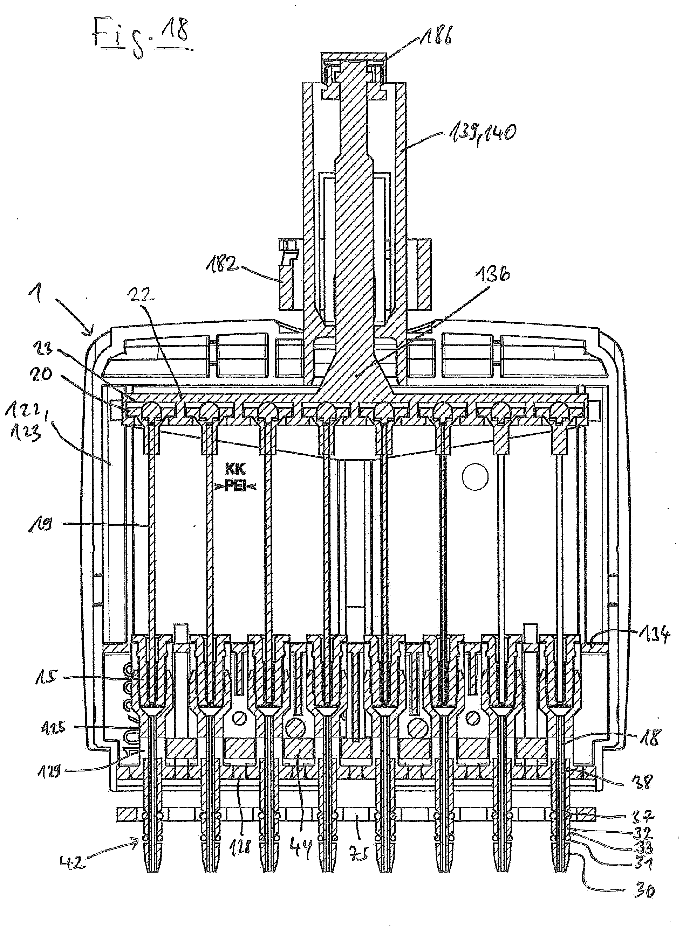

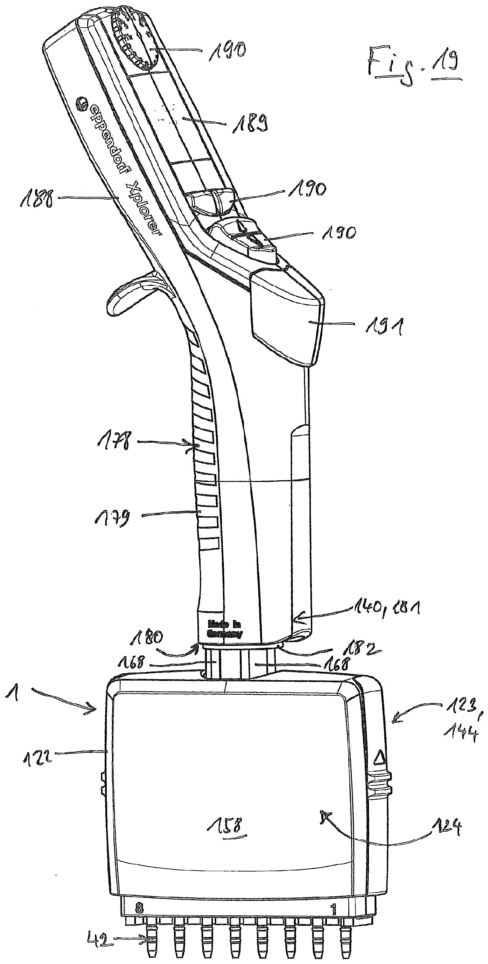

Das Ausführungsbeispiel von Fig. 18 und 19 unterscheidet sich von dem zuvor Beschriebenen dadurch, dass die Verlagerung der Kolben 16 elektrisch angetrieben ist. Da der elektrische Antrieb die Verlagerung der Kolben 16 nach unten und nach oben bewirkt, ist keine zweite Schraubenfeder 142 zwischen der Stange 135 und dem ersten Gehäuse 122 vorhanden. Ferner ist am oberen Ende der Stange 135 ein topfförmiges erstes Magnetkupplungselement 186 zum Kuppeln mit einem entsprechenden zweiten Magnetkupplungselement des Pipettenoberteils 178 vorhanden.

Das Pipettenoberteil 178 hat ein Gehäuseoberteil 179 mit einem stielförmigen Griffabschnitt 187 und einem demgegenüber abgewinkelten Pipettenkopf 188. In dem Pipettenkopf 188 befindet sich ein Display 189 und Bedienelemente 190 wie Taster und ein Wahlrad. Darüber hinaus ist im Übergangsbereich zwischen Pipettenkopf 188 und Griffabschnitt 187 ein Abwerferknopf 191 angeordnet.

Auch bei diesem Ausführungsbeispiel ist der Dosierkopf 1 über erste und zweite Mittel zum lösbaren Verbinden 140, 181 lösbar mit dem Pipettenoberteil 178 verbunden. Auch liegen die Übertragungselemente 168 am unteren Rand der Abwerferhülse 182 an. Die Kopplung des Antriebssystemes des Pipettenoberteils 178 mit den Kolben 16 erfolgt über die ersten und zweiten Magnetkupplungselemente 186.

Das Abwerfen der Pipettenspitzen 43 wird über den Abwerferknopf 191 gesteuert, der über eine entsprechende Mechanik mit der Abwerferhülse 182 verbunden ist.

Das Aufklemmen von Pipettenspitzen 43 erfolgt im Übrigen wie bei dem zuvor beschriebenen Ausführungsbeispiel. Für die Aufnahme und Abgabe von Flüssigkeit sind die Bedienelemente 190 zum Einstellen von Dosierparametern und Betriebsmodi und Steuern von Kolbenbewegungen entsprechend zu betätigen.

### Bezugszeichenliste:

- 1: Dosierkopf
- 2: Träger
- 3: Trägerplatte
- 4: Trägergehäuse
- 5: Bodenwand
- 6: Seitenwand
- 7: Seitenwand
- 8: Seitenwand
- 9: Seitenwand
- 10: Stehbolzen
- 11: (erste) Gewindebohrung
- 12: (zweite) Gewindebohrung
- 13: (dritte) Gewindebohrung
- 14: Kolben-Zylinder-Einheit
- 15: Zylinder
- 16: Kolben
- 17: Außengewinde
- 18: Rohr
- 19: Kolbenstange
- 20: Kolbenkopf
- 21: Ringnut
- 22: Kolbenplatte
- 23: Kanal
- 24: Kanalwand
- 25: Kanalschulter
- 26: Schlitzöffnung
- 27: Stirnöffnung
- 28: Befestigungszapfen
- 29: Gewindemutter
- 30: Stützvorsprung
- 31: (erster) O-Ring
- 32: (erste) Hülse
- 33: (erste) Verjüngung
- 34: (erstes) Ende
- 35: Bund
- 36: (erste) Stirnfläche
- 37: (zweiter) O-Ring
- 38: (zweite) Hülse
- 39: (zweite) Verjüngung
- 40: (zweite) Stirnfläche
- 41: Ausgleichsring
- 42: Ansatz
- 43: Pipettenspitze
- 44: Druckplatte
- 45: (erste) Löcher
- 46: Röhrchen
- 47: Spritzenöffnung
- 48: Aufstecköffnung
- 49: Dichtsitz
- 50: Erweiterung
- 51: (erste) Verlagerungseinrichtung
- 52: Führungsachse
- 53: Kugelumlaufgetriebe
- 54: (erste) Durchgangslöcher
- 55: (zweite) Durchgangslöcher
- 56: Kulissenelement
- 57: Kulissenbasis
- 58: Kulisse
- 59: (erster) Lagerbock
- 60: (erstes) Kugellager
- 61: (erste) Welle
- 62: Exzenterscheibe
- 63: Exzenter
- 64: (zweites Kugellager)
- 65: (erstes) Schneckenrad
- 66: (zweite) Welle
- 67: (erste) Schnecke
- 68: (zweiter) Lagerbock
- 69: (zweites) Schneckenrad
- 70: (zweite) Schnecke
- 71: Motorwelle
- 72: Elektromotor
- 73: Exzentergetriebe
- 74: (zweite) Verlagerungseinrichtung
- 75: Anschlagplatte
- 76: (zweite) Löcher
- 77: (dritte) Verlagerungseinrichtung
- 78: Übertragungsachse
- 79: Gewindeloch
- 80: Kipphebel
- 81: Abwurfachse
- 82: (drittes) Durchgangsloch
- 83: (vierte) Gewindebohrung
- 84: Federelement
- 85: Führungsstange
- 86: (fünfte) Gewindebohrung
- 87: Teller
- 88: (erste) Schraubenfeder
- 91: (oberer) Zapfenabschnitt
- 92: Verbindungselement
- 93: Bajonett-Verbindung
- 94: (mittlerer) Zapfenabschnitt
- 95: (unterer) Zapfenabschnitt
- 96: (zentrale) Bohrung
- 97: Längsnut
- 98: Flügel
- 99: Spindel
- 100: Lagerzapfen
- 101: (drittes) Kugellager
- 102: Lagerbuchse
- 103: Lagerträger
- 104: Lasche
- 105: Gewindestift
- 106: Mitnehmer
- 107: Schlitz
- 108: Zylinderstift
- 109: Nut
- 110: Dreiachsübertrager
- 111: Dosierautomat
- 112: Zapfenaufnahme
- 113: (erste) Steckverbindung
- 114: (zweite) Steckverbindung
- 115: Spannungsversorgung
- 116: Steuerungseinrichtung
- 117: Halter
- 118: Vorlagenbehälter
- 119: Aufnahme
- 120: Mikrotiterplatte
- 121: Abfallbehälter
- 122: (erstes) Gehäuse
- 123: (vordere) Gehäuseschale
- 124: (hintere) Gehäuseschale
- 125: Zapfen
- 126: Kreisscheibe
- 127: (viertes) Durchgangsloch
- 128: (untere) Gehäusewand
- 129: Abflachung
- 130: (fünftes) Durchgangsloch
- 131: Fortsatz
- 132: Durchgangskanal
- 133: (sechstes) Durchgangsloch
- 134: Stützplatte
- 135: Stange
- 136: Kolbenbetätiger
- 137: Kontaktfläche
- 138: (obere) Gehäusewand
- 139: Haltelement
- 140: (erste) Mittel zum lösbaren Verbinden
- 141: Widerlagerelement
- 142: (zweite) Schraubenfeder
- 143: Ausnehmung
- 144: (vordere) Gehäusewand
- 145: Führungsbohrung
- 146: Führungsstift
- 147: Zahnstange
- 148: (erste) Zahnung
- 149: Zahnklinke
- 150: (erstes) Keilelement
- 151: (zweite) Zahnung
- 152: (erste) Achse
- 153: (erster) Schenkel
- 154: Lagerträger
- 155: (zweiter) Schenkel
- 156: Auge
- 157: Haltestift
- 158: (hintere) Gehäusewand
- 159: (dritte) Schraubenfeder
- 160: (erstes) Abwerferteil
- 161: Abwerfer
- 162: (zweites) Abwerferteil
- 163: Abwerferstange
- 164: Auskragung
- 165: Betätigungselement
- 166: (erste) Vertiefung
- 167: (erstes) Widerlager
- 168: Übertragungselement
- 169: Schlitz
- 170: (zweites) Widerlager
- 171: (vierte) Schraubenfeder
- 172: (zweites) Keilelement
- 173: Winkelhebel
- 174: (zweite) Achse
- 175: (erster) Hebelarm
- 176: (zweiter) Hebelarm
- 177: (zweite) Vertiefung
- 178: Pipettenoberteil
- 179: (zweites) Gehäuse
- 180: Gehäuseöffnung
- 181: (zweite) Mittel zum lösbaren Verbinden
- 182: Abwerferhülse
- 183: (erste) Antriebseinrichtung
- 184: (zweite) Antriebseinrichtung
- 185: Dosierknopf
- 186: (erstes) Magnetkupplungselement
- 187: Griffabschnitt
- 188: Pipettenkopf
- 189: Display
- 190: Bedienelement
- 191: Abwerferknopf

## Patentansprüche

1. Dosierkopf für einen Dosierautomaten oder eine andere Dosiervorrichtung umfassend:
• einen Träger (2), an dem nebeneinander eine Vielzahl paralleler Ansätze (42) zum Aufnehmen von Pipettenspitzen (43) angeordnet ist,
• wobei jeder Ansatz (42) folgende Merkmale aufweist:
• ein Rohr (18) mit einem nach außen vorstehenden zumindest teilweise umlaufenden Stützvorsprung (30) am unteren Ende,
• eine erste Hülse (32), die das Rohr (18) umschließt und auf dem Rohr (18) axial verlagerbar ist, und
• einen elastomeren ersten O-Ring (31), der das Rohr (18) umschließt; neben dem unteren Ende der ersten Hülse (32) angeordnet ist und unten am Stützvorsprung (30) abgestützt ist,
• eine oberhalb der Hülsen (32) angeordnete Druckplatte (44) mit einer Vielzahl erster Löcher (45), durch die sich die Rohre (18) hindurch erstrecken, wobei die Druckplatte (44) entlang der Rohre (18) zwischen einer Freigabestellung in einem ersten Abstand von den Stützvorsprüngen (30) und einer Klemmstellung in einem den ersten Abstand unterschreitenden, zweiten Abstand von den Stützvorsprüngen (30) verlagerbar ist, die Druckplatte (44) in der Klemmstellung so gegen den oberen Rand der benachbarten Hülsen (32) sämtlicher Ansätze (42) drückt, dass die Hülsen (32) mit den unteren Enden an die benachbarten O-Ringe (31) angepresst und die O-Ringe (31) aufgeweitet sind, um auf die Ansätze (42) aufgeschobene Pipettenspitzen (43) festzuklemmen,
• eine erste Verlagerungseinrichtung (51), die mit der Druckplatte (44) verbunden ist und ausgebildet ist, die Druckplatte (44) zwischen der Freigabestellung und der Klemmstellung zu verlagern.

2. Dosierkopf nach Anspruch 1,
• wobei jeder Ansatz (42) folgende Merkmale aufweist:
• eine zweite Hülse (38), die oberhalb der ersten Hülse (32) das Rohr (18) umschließt und auf dem Rohr (18) axial verlagerbar ist,
• einen elastomeren zweiten O-Ring (37), der das Rohr (18) umschließt, neben dem zweiten Ende der zweiten Hülse (38) angeordnet ist und unten an der ersten Hülse (32) abgestützt ist, und
• die ersten und zweiten Hülsen (32, 38) sind zwischen einer Freigabestellung in einem ersten Abstand von den Stützvorsprüngen (30) und einer Klemmstellung in einem den ersten Abstand unterschreitenden, zweiten Abstand von den Stützvorsprüngen (30) verlagerbar, in der Klemmstellung sind die zweiten Hülsen (38) mit den unteren Enden an die benachbarten zweiten O-Ringe (37) angepresst und die ersten Hülsen (32) sind mit den unteren Enden an die benachbarten ersten O-Ringe (31) angepresst und die ersten und zweiten O-Ringe (31, 37) sind aufgeweitet, um auf die Ansätze (42) aufgeschobene Pipettenspitzen (43) festzuklemmen,
• und wobei der Dosierkopf eine zweite Verlagerungseinrichtung (74) aufweist, die mit den ersten und zweiten Hülsen (32, 38) sämtlicher Ansätze (42) gekoppelt und ausgebildet ist, um die ersten und zweiten Hülsen (32, 38) zwischen der Freigabestellung und der Klemmstellung zu verlagern, und
• die Druckplatte (44) und die erste Verlagerungseinrichtung (51) die zweite Verlagerungseinrichtung zum Verlagern der ersten und zweiten Hülsen (32, 38) ist und die Druckplatte (44) gegen den oberen Rand der zweiten Hülsen (38) drückt.

3. Dosierkopf nach Anspruch 1 oder 2, bei dem die Hülsen (32, 38) am unteren Ende eine umlaufende Verjüngung aufweisen.

4. Dosierkopf nach einem der Ansprüche 1 bis 3, bei dem die erste Verlagerungseinrichtung (51) oder die zweite Verlagerungseinrichtung (74) an dem Träger (2) abgestützt ist.

5. Dosierkopf nach einem der Ansprüche 2 bis 4, bei dem der Innendurchmesser des ersten O-Ringes (31) den Innendurchmesser des zweiten O-Ringes (37) unterschreitet und der Außendurchmesser des ersten O-Ringes (31) den Außendurchmesser des zweiten O-Ringes (37) unterschreitet, wobei vorzugsweise der erste O-Ring (31) am Innenumfang auf dem Rohr (18) geführt und der zweite O-Ring (37) am Innenumfang auf einem darin eingreifenden Ende der zweite Hülse (38) geführt ist.

6. Dosierkopf nach einem der Ansprüche 1 bis 5, bei dem die erste Verlagerungseinrichtung (51) mindestens eine Führungsachse (52) aufweist, die unten mit der Druckplatte (44) verbunden ist und oben über ein Exzentergetriebe (73) mit einem Elektromotor (72) gekoppelt ist.

7. Dosierkopf nach Anspruch 6 umfassend eines oder mehrere der nachfolgenden Merkmale:
• vier Führungsachsen (52) sind am unteren Ende mit der Druckplatte (44) verbunden und am oberen Ende über mindestens ein Exzentergetriebe (73) mit mindestens einem Elektromotor (72) gekoppelt,
• jede Führungsachse (52) ist in einem Kugelumlauflager (53) gelagert, das im Träger (2) gehalten ist,
• jede Führungsachse weist (52) am oberen Ende eine senkrecht zur Führungsachse erstreckte Kulisse (58) auf, ein Exzenter (63) an einer senkrecht zur Führungsachse (52) und zur Kulisse (58) gerichteten ersten Welle (61) greift in die Kulisse (58) ein und die erste Welle (61) ist mit einem Elektromotor (72) gekoppelt,
• jeder Exzenter (63) trägt ein Kugellager (64), das in einer Kulisse (58) geführt ist,
• ein einziger Elektromotor (72) ist über ein erstes Getriebe mit sämtlichen ersten Wellen (61) gekoppelt,
• der mindestens eine Elektromotor (72) ist mit einer elektrischen Steuerungseinrichtung (116) gekoppelt, die den Elektromotor (72) so steuert, dass die Druckplatte (44) zwischen der Freigabestellung und der Klemmstellung verlagerbar ist,
• die Motorwelle (71) des mindestens einen Elektromotors (72) ist mit einem Drehwinkelgeber gekoppelt, der mit der elektrischen Steuerungseinrichtung (116) verbunden ist, die ausgebildet ist, die Lage der Druckplatte (44) in Abhängigkeit von der mittels des Drehwinkelgebers erfassten Drehstellung der Motorwelle (71) des Elektromotors (72) zu ermitteln.

8. Dosierkopf nach einem der Ansprüche 1 bis 7, bei dem unterhalb der Druckplatte (44) eine Anschlagplatte (75) angeordnet ist, die eine Vielzahl zweiter Löcher (76) aufweist, durch die sich die Ansätze (42) hindurch erstrecken, um Pipettenspitzen (43) bis zur Anlage an der Anschlagplatte (75) auf die Ansätze (42) aufzuschieben.

9. Dosierkopf nach Anspruch 8, bei dem eine dritte Verlagerungseinrichtung (77) mit der Anschlagplatte (75) verbunden und ausgebildet ist, die Anschlagplatte (75) zwischen einer Anschlagstellung in einem ersten Abstand von den Stützvorsprüngen (30) und einer Abwurfstellung in einem zweiten Abstand von den Stützvorsprüngen (30), der den ersten Abstand unterschreitet, zu verlagern, um in der Anschlagstellung Pipettenspitzen (43) bis zur Anlage an der Anschlagplatte (75) auf die Ansätze (42) aufzuschieben und durch Verlagern der Anschlagplatte (75) aus der Anschlagstellung in die Abwurfstellung von den Ansätzen (42) abzuwerfen.

10. Dosierkopf nach Anspruch 9, bei dem die dritte Verlagerungseinrichtung schwenkbar auf dem Träger (2) gelagerte Kipphebel (80), fest mit der Druckplatte (44) verbundene, von dieser hochstehende Übertragungsachsen (78), die jeweils an einem Ende eines Kipphebels (80) angreifen, und fest mit der Anschlagplatte (75) verbundene, jeweils an einem anderen Ende eines Kipphebels (80) anliegende Abwurfachsen (81) umfasst, sodass beim Anheben der Druckplatte (44) die Übertragungsachsen (78) die Kipphebel (80) schwenken und diese über die Abwurfachsen (81) die Anschlagplatte (75) aus der Anschlagstellung in die Abwurfstellung drücken.

11. Dosierkopf nach einem der Ansprüche 1 bis 10, bei dem auf jedem Rohr (18) neben der Druckplatte (44) ein das Rohr (18) umschließender Ausgleichsring (41) verlagerbar angeordnet ist und die Druckplatte (44) über die Ausgleichsringe (41) gegen die oberen Enden der benachbarten Hülsen (38) drückt.

12. Dosierkopf nach einem der Ansprüche 2 bis 11, bei dem die Hülsen (32, 38) jeweils oben eine ebene Stirnfläche (36, 40) aufweisen, an denen die Druckplatte (44) oder die zweiten O-Ringe (37) oder die Ausgleichsringe (41) anliegen.

13. Dosierkopf nach einem der Ansprüche 1 bis 12,
• bei der die erste Verlagerungseinrichtung folgende Merkmale aufweist:
• eine unterhalb der Druckplatte angeordnete Anschlagplatte (75), die eine Vielzahl zweiter Löcher (76) aufweist, durch die sich die Ansätze (42) hindurch erstrecken, die zwischen einer Anschlagstellung in einem ersten Abstand von den Stützvorsprüngen (30) und einer Abwurfstellung in einem zweiten Abstand von den Stützvorsprüngen (30), der den ersten Abstand unterschreitet, verlagerbar ist, und
• ein zweites Getriebe (147, 173), das mit der Anschlagplatte (75) und der Druckplatte (44) gekoppelt ist, wobei das zweite Getriebe (147, 173) ausgebildet ist, bei Verlagerung der Anschlagplatte (75) aus der Abwurfstellung in die Anschlagstellung die Druckplatte (44) aus der Freigabestellung in die Klemmstellung zu verlagern,
• wobei der Dosierkopf (1) zudem folgende Merkmale umfasst:
• eine Rasteinrichtung, die mindestens ein mit der Anschlagplatte (75) verbundenes erstes Rastelement (147) und mindestens ein mit dem Träger verbundenes zweites Rastelement (149) aufweist, wobei die ersten und zweiten Rastelemente (147, 149) ausgebildet sind, miteinander zu verrasten, wenn die Druckplatte (44) in der Klemmstellung angeordnet ist, und
• eine Entrastungseinrichtung, die mindestens ein Entrastungselement (150, 172) und ein mit dem Entrastungselement (150, 172) verbundenes Abwerferelement (163) aufweist, wobei die Entrastungseinrichtung ausgebildet ist, bei Verlagerung des Abwerferelements (163) aus einer Ausgangsstellung in eine Entrastungsstellung die Rastverbindung zwischen dem ersten Rastelement (147) und dem zweiten Rastelement (140) aufzuheben.

14. Dosierkopf nach Anspruch 13, bei dem das zweite Getriebe ein Hebelgetriebe ist, das zwei Winkelhebel (173) umfasst, die schwenkbar am Träger gelagert sind, mit den Enden eines ersten Hebelarmes (176) in einem Abstand voneinander an der Oberseite der Druckplatte (44) anliegen und mit den Enden eines zweiten Hebelarmes (175) in einem Abstand voneinander mit der Anschlagplatte (75) gekoppelt sind.

15. Dosierkopf nach Anspruch 13 oder 14, bei denen das erste Rastelement eine von der Anschlagplatte (75) vertikal nach oben vorstehende Zahnstange (147) und das zweite Rastelement eine schwenkbar am Träger gelagerte und von einer Federeinrichtung in Richtung auf die Zahnstange vorgespannte Rastklinke (149) ist, die bei Verlagerung der Anschlagplatte (75) nach oben in die Zahnstange (147) einrastet, wobei vorzugsweise die Entrastungseinrichtung mindestens ein Keilgetriebe umfasst, das ein spitzwinklig zur Vertikalen geneigtes erstes Keilelement (150) an der Rastklinke (149) und/oder ein spitzwinklig zur Vertikalen geneigtes zweites Keilelement (172) am Abwerferelement (163) aufweist, wobei das Abwerferelement (163) an Führungseinrichtungen in vertikaler Richtung verlagerbar am Träger geführt ist, sodass durch Verlagerung des Abwerferelementes (163) in vertikaler Richtung das Abwerferelement (163) und die Rastklinke (149) mit mindestens einem der ersten und zweiten Keilelemente (150, 172) in Eingriff miteinander bringbar sind, wodurch die Rastklinke (149) aus der Zahnung der Zahnstange (147) aushebbar ist.

16. Dosierkopf nach einem der Ansprüche 13 bis 15, bei dem ein erstes Abwerferteil (160) die Anschlagplatte (75) und zwei von der Anschlagplatte nach oben vorstehende Zahnstangen (147) umfasst, ein zweites Abwerferteil (162) in Form einer Traverse zwei vertikal von der Traverse nach unten vorstehenden Abwerferelementen (163) umfasst, und ein vertikal nach oben vorstehendes Betätigungselement umfasst und das erste Abwerferteil (160) und das zweite Abwerferteil (162) erste und zweite Anschlagelemente aufweisen, die nach dem Entrasten der ersten und zweiten Rastelemente aufeinandertreffen, wodurch das zweite Abwerferteil (162) bei einer weiteren Verlagerung nach unten das erste Abwerferteil (160) mitnimmt.

17. Dosierkopf nach einem der Ansprüche 1 bis 16 mit Pipettenspitzen (43), wobei die Ansätze (42) in Pipettenspitzen (43) eingesetzt sind und die Pipettenspitzen (43) durch aufgeweitete O-Ringe (31, 37) auf den Ansätzen (42) festgeklemmt sind.

18. Dosiervorrichtung umfassend einen Dosierkopf (1) gemäß einem der Ansprüche 1 bis 17.

19. Dosiervorrichtung nach Anspruch 18, die eine Dosierstation oder ein Dosierautomat (111) oder ein Laborautomat oder eine Mehrkanalpipette ist.

20. Dosiervorrichtung nach Anspruch 19, umfassend mindestens eine der nachstehenden Einrichtungen:
• mindestens einen Halter (117) mit einer Vielzahl darin gehaltener Pipettenspitzen (43),
• mindestens ein Probengefäß (120) zum Bereitstellen von flüssigen Proben,
• mindestens ein Reagenzgefäß (118) zum Bereitstellen von Reagenzien,
• mindestens einen Abfallbehälter (121) zum Aufnehmen gebrauchter Pipettenspitzen (43).

21. Dosiervorrichtung nach Anspruch 19, bei dem der Dosierkopf (1) an einen Dreiachsübertrager (110) gehalten ist, der ausgebildet ist, den Dosierkopf (1) entlang von drei Achsen zu verlagern.

22. Verfahren zum Dosieren von Flüssigkeiten, bei dem die Flüssigkeiten mittels eines Dosierkopfes gemäß einem der Ansprüche 1 bis 16 dosiert werden.

23. Verfahren gemäß Anspruch 22, bei dem
• eine Gruppe Pipettenspitzen in einem Halter für Pipettenspitzen bereitgestellt wird,
• die Hülsen des Dosierkopfes in die Freigabestellung verlagert werden,
• der Dosierkopf mit den Ansätzen in die oberen Enden der bereitgestellten Pipettenspitzen eingeführt wird, bis die O-Ringe in die bereitgestellten Pipettenspitzen eintauchen,
• die Hülsen in die Klemmstellung gebracht und hierdurch die Pipettenspitzen auf den Ansätzen festgeklemmt werden,
• der Dosierkopf angehoben und die darauf festgeklemmten Pipettenspitzen aus dem Halter entnommen werden,
• mit den auf den Ansätzen des Dosierkopfes festgeklemmten Pipettenspitzen Dosierungen durchgeführt werden,
• die Pipettenspitzen durch Verlagern der Hülsen aus der Klemmstellung in die Freigabestellung von den Ansätzen freigegeben werden.

24. Verfahren nach Anspruch 22 oder 23, bei dem vor dem Eintauchen der Ansätze in die Pipettenspitzen die Anschlagplatte in die Anschlagstellung gebracht wird und die Ansätze in die Pipettenspitzen eingetaucht werden, bis die oberen Enden der Pipettenspitzen an der Anschlagplatte anliegen, danach die Pipettenspitzen durch Verlagern der Hülsen aus der Freigabestellung in die Klemmstellung an den Ansätzen festgeklemmt werden und nach Durchführen der Dosierungen die Pipettenspitzen durch Verlagern der Hülsen aus der Klemmstellung in die Freigabestellung und durch Verlagern der Anschlagplatte aus der Anschlagstellung in die Abwurfstellung von den Ansätzen gelöst werden.

25. Verfahren nach einem der Ansprüche 22 bis 24, bei dem der Dosierkopf vor dem Abwerfen der Pipettenspitzen von den Ansätzen über einen Abfallbehälter verlagert wird und die Pipettenspitzen in den Abfallbehälter abgeworfen werden.

## Claims

1. A metering head for a metering machine or another metering device comprising:
• a carrier (2) to which a plurality of parallel attachments (42) for receiving pipette tips (43) are arranged one next to the other,
• wherein each attachment (42) has the following features:
• a tube (18) having an outwardly protruding, at least partially circumferential supporting projection (30) at the lower end,
• a first sleeve (38) which encloses the tube (18) and is axially displaceable on the tube (18), and
• a first elastomer O-ring (31) which encloses the tube (18), is arranged next to the lower end of the first sleeve (32) and is supported at the bottom on the supporting projection (30),
• a pressure plate (44) arranged above the sleeves (32) and having a plurality of first holes (45) through which the tubes (18) extend, wherein the pressure plate (44) can be displaced along the tubes (18) between a release position at a first distance from the supporting projections (30) and a clamping position at a second distance from the supporting projections (30), which second distance is less than the first distance, and the pressure plate (44) pushes against the upper edge of the adjacent sleeves (32) of all attachments (42) in the clamping position in such a way that the sleeves (32) are pressed by the lower ends against the adjacent O-rings (31) and the O-rings (31) are flared in order to securely clamp pipette tips (43) pushed onto the attachments (42),
• a first displacement apparatus (51) which is connected to the pressure plate (44) and is designed to displace the pressure plate (44) between the release position and the clamping position.

2. The metering head according to claim 1,
• wherein each attachment (42) has the following features:
• a second sleeve (38) which encloses the tube (18) above the first sleeve (32) and is axially displaceable on the tube (18),
• a second elastomer O-ring (37) which encloses the tube (18), is arranged next to the second end of the second sleeve (38) and is supported at the bottom on the first sleeve (32), and
• the first and second sleeves (32, 38) can be displaced between a release position at a first distance from the supporting projections (30) and a clamping position at a second distance from the supporting projections (30), which second distance is less than the first distance, and, in the clamping position, the second sleeves (38) are pressed by the lower ends against the adjacent second O-rings (37) and the first sleeves (32) are pressed by the lower ends against the adjacent first O-rings (31) and the first and second O-rings (31, 37) are flared in order to securely clamp pipette tips (43) pushed onto the attachments (42),
• and wherein the metering head comprises a second displacement apparatus (74) which is coupled to the first and second sleeves (32, 38) of all attachments (42) and is designed to displace the first and second sleeves (32, 38) between the release position and the clamping position, and
• the pressure plate (44) and the first displacement apparatus (51) are the second displacement apparatus for displacing the first and second sleeves (32, 38) and the pressure plate (44) pushes against the upper edge of the second sleeves (38).

3. The metering head according to claim 1 or 2, wherein the sleeves (32, 38) have a circumferential tapering at the lower end.

4. The metering head according to any one of claims 1 to 3, wherein the first displacement apparatus (51) or the second displacement apparatus (74) is supported on the carrier (2).

5. The metering head according to any one of claims 2 to 4, wherein the inner diameter of the first O-ring (31) is less than the inner diameter of the second O-ring (37) and the outer diameter of the first O-ring (31) is less than the outer diameter of the second O-ring (37), wherein, preferably, the first O-ring (31) is guided by the inner circumference on the tube (18) and the second O-ring (37) is guided by the inner circumference on an end of the second sleeve (38) that engages therein.

6. The metering head according to any one of claims 1 to 5, wherein the first displacement apparatus (51) has at least one guide shaft (52) which is connected at the bottom to the pressure plate (44) and is coupled at the top to an electric motor (72) via an eccentric mechanism (73).

7. The metering head according to claim 6, comprising one or more of the following features:
• four guide shafts (52) are connected at the lower end to the pressure plate (44) and are coupled at the upper end to at least one electric motor (72) via at least one eccentric mechanism (73),
• each guide shaft (52) is mounted in a recirculating ball bearing (53) which is held in the carrier (2),
• each guide shaft (52) has, at the upper end, a slotted link (58) which extends perpendicularly to the guide shaft, an eccentric (63) on a first shaft (61) directed toward the guide shaft (52) and the slotted link (58) engages in the slotted link (58) and the first shaft (61) is coupled to an electric motor (72),
• each eccentric (63) bears a ball bearing (64) which is guided in a slotted link (58),
• a single electric motor (72) coupled to all first shafts (61) via a first transmission,
• the at least one electric motor (72) is coupled to an electric control apparatus (116) which controls the electric motor (72) such that the pressure plate (44) can be displaced between the release position and the clamping position,
• the motor shaft (71) of the at least one electric motor (72) is coupled to a rotary encoder which is connected to the electric control apparatus (116), which is designed to determine the position of the pressure plate (44) depending on the rotational position of the motor shaft (71) of the electric motor (72) detected by means of the rotary encoder.

8. The metering head according to any one of claims 1 to 7, wherein a stop plate (75) is arranged below the pressure plate (44) and has a plurality of second holes (76) through which the attachments (42) extend in order to push pipette tips (43) onto the attachments (42) until they come into contact with the stop plate (75).

9. The metering head according to claim 8, wherein a third displacement apparatus (77) is connected to the stop plate (75) and is designed to displace the stop plate (75) between a stop position at a first distance from the supporting projections (30) and an ejection position at a second distance from the supporting projections (30), which second distance is less than the first distance, in order, in the stop position, to push pipette tips (43) onto the attachments (42) until they come into contact with the stop plate (75) and, by displacing the stop plate (75) from the stop position into the ejection position, to eject pipette tips from the attachments (42).

10. The metering head according to claim 9, wherein the third displacement apparatus comprises tilting levers (80) which are pivotably mounted on the carrier (2), transmission shafts (78) which are rigidly connected to the pressure plate (44), project vertically therefrom and engage on an end of a tilting lever (80) in each case, and ejection shafts (81) which are rigidly connected to the stop plate (75) and abut another end of a tilting lever (80) in each case, such that, when the pressure plate (44) is raised, the transmission shafts (78) pivot the tilting levers (80) and said tilting levers, via the ejection shafts (81), push the stop plate (75) from the stop position into the ejection position.

11. The metering head according to any one of claims 1 to 10, wherein a compensating ring (41) which encloses the tube (18) is displaceably arranged on each tube (18) next to the pressure plate (44) and the pressure plate (44), via the compensating rings (41), pushes against the upper ends of the adjacent sleeves (38).

12. The metering head according to any one of claims 2 to 11, wherein the sleeves (32, 38) each have a planar end surface (36, 40) at the top, which abut the pressure plate (44) or the second O-rings (37) or the compensating rings (41).

13. The metering head according to any one of claims 1 to 12,
• wherein the first displacement apparatus has the following features:
• a stop plate (75) which is arranged below the pressure plate and which has a plurality of second holes (76) through which the attachments (42) extend, which attachments can be displaced between a stop position at a first distance from the supporting projections (30) and an ejection position at a second distance from the supporting projections (30), which second distance is less than the first distance, and
• a second transmission (147, 173) which is coupled to the stop plate (75) and to the pressure plate (44), wherein the second transmission (147, 173) is designed to displace the pressure plate (44) from the release position into the clamping position when the stop plate (75) is displaced from the ejection position into the stop position,
• wherein the metering head (1) also comprises the following features:
• a latching apparatus which has at least one first latching element (147) connected to the stop plate (75) and at least one second latching element (149) connected to the carrier, wherein the first and second latching elements (147, 149) are designed to latch with one another when the pressure plate (44) is arranged in the clamping position, and
• an unlatching apparatus which has at least one unlatching element (150, 172) and an ejector element (163) connected to the unlatching element (150, 172), wherein the unlatching apparatus is designed to override the latching connection between the first latching element (147) and the second latching element (140) when the ejector element (163) is displaced from a starting position into an unlatching position.

14. The metering head according to claim 13, wherein the second transmission is a lever mechanism which comprises two angle levers (173) which are pivotably mounted on the carrier, abut the upper side of the pressure plate (44) at a distance from one another by the ends of a first lever arm (176) and are coupled to the stop plate (75) at a distance from one another by the ends of a second lever arm (175).

15. The metering head according to claim 13 or 14, wherein the first latching element is a toothed rod (147) which protrudes vertically upward from the stop plate (75) and the second latching element is a latching pawl (149) which is pivotably mounted on the carrier, is preloaded by a spring apparatus in the direction of the toothed rod and latches in the toothed rod (147) when the stop plate (75) is displaced upward, wherein preferably the unlatching apparatus comprises at least one wedge mechanism which has a first wedge element (150) on the latching pawl (149) that is inclined at an acute angle with respect to the vertical and/or a second wedge element (172) on the ejector element (163) that is inclined at an acute angle with respect to the vertical, wherein the ejector element (163) is guided on guide apparatuses in the vertical direction so as to be displaceable on the carrier, such that, by displacing the ejector element (163) in the vertical direction, the ejector element (163) and the latching pawl (149) can be brought into engagement with one another by means of at least one of the first and second wedge elements (150, 172), as a result of which the latching pawl (149) can be raised out of the toothing of the toothed rod (147).

16. The metering head according to any one of claims 13 to 15, wherein a first ejector part (160) comprises the stop plate (75) and two toothed rods (147) that protrude upward from the stop plate, a second ejector part (162) in the form of a crossbar comprises two ejector elements (163) that protrude vertically downward from the crossbar, and comprises an actuation element that protrudes vertically upward and the first ejector part (160) and the second ejector part (162) have first and second stop elements which collide with one another after the first and second latching elements have been unlatched, as a result of which the second ejector part (162) entrains the first ejector part (160) during further downward displacement.

17. The metering head according to any one of claims 1 to 16 with pipette tips (43), wherein the attachments (42) are inserted in pipette tips (43) and the pipette tips (43) are securely clamped on the attachments (42) by means of flared O-rings (31, 37).

18. A metering device comprising a metering head (1) according to any one of claims 1 to 17.

19. The metering device according to claim 18, which is a metering station or a metering machine (111) or a laboratory machine or a multichannel pipette.

20. The metering device according to claim 19, comprising at least one of the following apparatuses:
• at least one holder (117) with a plurality of pipette tips (43) held therein,
• at least one sample container (120) for providing liquid samples,
• at least one reagent container (118) for providing reagents,
• at least one waste container (121) for receiving used pipette tips (43).

21. The metering device according to claim 19, wherein the metering head (1) is held on a three-axis transmitter (110) which is designed to displace the metering head (1) along three axes.

22. A method for metering liquids, wherein the liquids are metered by means of a metering head according to any one of claims 1 to 16.

23. The method according to claim 22, wherein
• a group of pipette tips is provided in a holder for pipette tips,
• the sleeves of the metering head are displaced into the release position,
• the metering head with the attachments is introduced into the upper ends of the provided pipette tips until the O-rings plunge into the provided pipette tips,
• the sleeves are brought into the clamping position and, as a result, the pipette tips are securely clamped on the attachments,
• the metering head is raised and the pipette tips securely clamped thereon are removed from the holder,
• metering is carried out using the pipette tips securely clamped on the attachments of the metering head,
• the pipette tips are released from the attachments by displacing the sleeves from the clamping position into the release position.

24. The method according to claim 22 or 23, wherein the stop plate is brought into the stop position before the attachments are plunged into the pipette tips and the attachments are plunged into the pipette tips until the upper ends of the pipette tips come into contact with the stop plate, subsequently the pipette tips are securely clamped at the attachments by displacing the sleeves from the release position into the clamping position and, after the metering has been performed, the pipette tips are released from the attachments by displacing the sleeves from the clamping position into the release position and by displacing the stop plate from the stop position into the ejection position.

25. The method according to any one of claims 22 to 24, wherein the metering head is displaced over a waste container before the pipette tips are ejected from the attachments and the pipette tips are ejected into the waste container.

## Revendications

1. Tête de dosage pour un doseur automatique ou un autre dispositif de dosage comportant :
• un support (2), sur lequel sont disposés une pluralité d'appendices (42) parallèles côte à côte pour la réception de pointes de pipette (43),
• dans laquelle chaque appendice (42) présente les caractéristiques suivantes :
• un tube (18) avec une saillie d'appui (30) au moins partiellement circonférentielle faisant saillie vers l'extérieur à l'extrémité inférieure,
• un premier manchon (32) entourant le tube (18) et déplaçable axialement sur le tube (18), et
• un premier joint torique élastomère (31) entourant le tube (18) ; disposé à côté de l'extrémité inférieure du premier manchon (32) et s'appuyant sur la saillie d'appui (30) sur le bas,
• une plaque de pression (44) disposée au-dessus des manchons (32) avec une pluralité de premiers trous (45), à travers lesquels s'étendent les tubes (18), dans laquelle la plaque de pression (44) est déplaçable le long des tubes (18) entre une position de libération à une première distance des saillies d'appui (30) et une position de serrage à une deuxième distance des saillies d'appui (30), laquelle est inférieure à la première distance, la plaque de pression (44) fait pression contre le bord supérieur des manchons (32) adjacents de tous les appendices (42) dans la position de serrage, de telle façon que les manchons (32) sont pressés avec les extrémités inférieures contre les joints toriques (31) adjacents et que les joints toriques (31) sont élargis, afin de bloquer des pointes de pipette (43) enfoncées sur les appendices (42),
• un premier système de déplacement (51), lequel est relié à la plaque de pression (44) et conçu pour déplacer la plaque de pression (44) entre la position de libération et la position de serrage.

2. Tête de dosage selon la revendication 1,
• dans laquelle chaque appendice (42) présente les caractéristiques suivantes :
• un deuxième manchon (38) entourant le tube (18) au-dessus du premier manchon (32) et déplaçable axialement sur le tube (18),
• un deuxième joint torique élastomère (37) entourant le tube (18), disposé à côté de la deuxième extrémité du deuxième manchon (38) et s'appuyant sur le premier manchon (32) sur le bas, et
• les premier et deuxième manchons (32, 38) sont déplaçables entre une position de libération à une première distance des saillies d'appui (30) et une position de serrage à une deuxième distance des saillies d'appui (30), laquelle est inférieure à la première distance, les deuxièmes manchons (38) étant pressés avec leurs extrémités inférieures contre les deuxièmes joints toriques (37) adjacents dans la position de serrage et les premiers manchons (32) étant pressés avec leurs extrémités inférieures contre les premiers joints toriques (31) adjacents et les premiers et deuxièmes joints toriques (31, 37) étant élargis, afin de bloquer des pointes de pipette (43) enfoncées sur les appendices (42),
• et dans laquelle la tête de dosage présente un deuxième système de déplacement (74), lequel est accouplé aux premiers et deuxièmes manchons (32, 38) de tous les appendices (42) et conçu pour déplacer les premiers et deuxièmes manchons (32, 38) entre la position de libération et la position de serrage, et
• la plaque de pression (44) et le premier système de déplacement (51) constituent le deuxième système de déplacement pour le déplacement des premiers et deuxièmes manchons (32, 38) et la plaque de pression (44) fait pression contre le bord supérieur des deuxièmes manchons (38).

3. Tête de dosage selon la revendication 1 ou 2, dans laquelle les manchons (32, 38) présentent un rétrécissement circonférentiel à l'extrémité inférieure.

4. Tête de dosage selon l'une des revendications 1 à 3, dans laquelle le premier système de déplacement (51) ou le deuxième système de déplacement (74) s'appuie sur le support (2).

5. Tête de dosage selon l'une des revendication 2 à 4, dans laquelle le diamètre intérieur du premier joint torique (31) est inférieur au diamètre intérieur du deuxième joint torique (37) et le diamètre extérieur du premier joint torique (31) est inférieur au diamètre extérieur du deuxième joint torique (37), dans laquelle le premier joint torique (31) est de préférence guidé sur la circonférence intérieure sur le tube (18) et le deuxième joint torique (37) est de préférence guidé sur la circonférence intérieure sur une extrémité du deuxième manchon (38) s'engageant dans celle-ci.

6. Tête de dosage selon l'une des revendications 1 à 5, dans laquelle le premier système de déplacement (51) présente au moins un axe de guidage (52), lequel est relié à la plaque de pression (44) sur le bas et accouplé à un moteur électrique (72) par le biais d'un engrenage excentrique (73) sur le haut.

7. Tête de dosage selon la revendication 6, comportant l'une ou plusieurs des caractéristiques suivantes :
• quatre axes de guidage (52) sont reliés à la plaque de pression (44) à l'extrémité inférieure et accouplés à au moins un moteur électrique (72) par le biais d'au moins un engrenage excentrique (73) à l'extrémité supérieure,
• chaque axe de guidage (52) est monté dans un roulement à recirculation de billes (53), lequel est maintenu dans le support (2),
• chaque axe de guidage (52) présente une coulisse (58) s'étendant perpendiculairement à l'axe de guidage à l'extrémité supérieure, un excentrique (63) sur un premier arbre (61) orienté perpendiculairement à l'axe de guidage (52) et à la coulisse (58) s'engage dans la coulisse (58) et le premier arbre (61) est accouplé à un moteur électrique (72),
• chaque excentrique (63) porte un roulement à billes (64), lequel est guidé dans une coulisse (58),
• un moteur électrique (72) unique est accouplé à l'ensemble des premiers arbres (61) par le biais d'un premier engrenage,
• l'au moins un moteur électrique (72) est accouplé à un système de commande électrique (116), lequel commande le moteur électrique (72) de telle façon que la plaque de pression (44) est déplaçable entre la position de libération et la position de serrage,
• l'arbre de moteur (71) de l'au moins un moteur électrique (72) est accouplé à un capteur d'angle de rotation, lequel est relié au système de commande électrique (116), lequel est conçu pour déterminer la position de la plaque de pression (44) en fonction de la position de rotation de l'arbre de moteur (71) du moteur électrique (72) détectée au moyen du capteur d'angle de rotation.

8. Tête de dosage selon l'une des revendications 1 à 7, dans laquelle une plaque de butée (75) présentant une pluralité de deuxièmes trous (76), à travers lesquels s'étendent les appendices (42), est disposée sous la plaque de pression (44), afin d'enfoncer des pointes de pipette (43) sur les appendices (42) jusqu'à la butée sur la plaque de butée (75).

9. Tête de dosage selon la revendication 8, dans laquelle un troisième système de déplacement (77) est relié à la plaque de butée (75) et conçu pour déplacer la plaque de butée (75) entre une position de butée à une première distance des saillies d'appui (30) et une position d'éjection à une deuxième distance des saillies d'appui (30), laquelle est inférieure à la première distance, afin d'enfoncer des pointes de pipette (43) sur les appendices (42) jusqu'à la butée sur la plaque de butée (75) dans la position de butée et de les éjecter des appendices (42) en déplaçant la plaque de butée (75) hors de la position de butée vers la position d'éjection.

10. Tête de dosage selon la revendication 9, dans laquelle le troisième système de déplacement comporte des leviers basculants (80) montés de façon pivotante sur le support (2), des axes de transmission (78) reliés fixement à la plaque de pression (44) et se dressant verticalement sur celle-ci tout en engageant respectivement une extrémité d'un levier basculant (80), et des axes d'éjection (81) reliés fixement à la plaque de butée (75) et s'appliquant respectivement sur une autre extrémité d'un levier basculant (80), de sorte que lors d'un soulèvement de la plaque de pression (44), les axes de transmission (78) font basculer les leviers basculants (80) et que ceux-ci poussent la plaque de butée (75) par le biais des axes d'éjection (81) hors de la position de butée vers la position d'éjection.

11. Tête de dosage selon l'une des revendications 1 à 10, dans laquelle une bague de compensation (41) entourant le tube (18) est disposée de façon déplaçable sur chaque tube (18), à côté de la plaque de pression (44), et la plaque de pression (44) fait pression contre les extrémités supérieure des manchons (38) adjacents par le biais des bagues de compensation (41).

12. Tête de dosage selon l'une des revendications 2 à 11, dans laquelle les manchons (32, 38) présentent respectivement une surface frontale plane (36, 40) sur le haut, sur laquelle s'applique la plaque de pression (44) ou les deuxièmes joints toriques (37) ou les bagues de compensation (41).

13. Tête de dosage selon l'une des revendications 1 à 12,
• dans laquelle le premier système de déplacement présente les caractéristiques suivantes :
• une plaque de butée (75) disposée sous la plaque de pression et présentant une pluralité de deuxièmes trous (76), à travers lesquels s'étendent les appendices (42), laquelle est déplaçable entre une position de butée à une première distance des saillies d'appui (30) et une position d'éjection à une deuxième distance des saillies d'appui (30), laquelle est inférieure à la première distance, et
• un deuxième engrenage (147, 173) accouplé à la plaque de butée (75) et à la plaque de pression (44), le deuxième engrenage (147, 173) étant conçu pour déplacer la plaque de pression (44) hors de la position de libération vers la position de serrage lors d'un déplacement de la plaque de butée (75) hors de la position d'éjection vers la position de butée,
• dans laquelle la tête de dosage (1) comporte en outre les caractéristiques suivantes :
• un système d'encliquetage présentant au moins un premier élément d'encliquetage (147) relié à la plaque de butée (75) et au moins un deuxième élément d'encliquetage (149) relié au support, dans laquelle les premier et deuxième éléments d'encliquetage (147, 149) sont conçus pour s'encliqueter entre eux lorsque la plaque de pression (44) est disposée dans la position de serrage, et
• un système de désencliquetage présentant au moins un élément de désencliquetage (150, 172) et un élément d'éjection (163) relié à l'élément de désencliquetage (150, 172), dans laquelle le système de désencliquetage est conçu pour supprimer la liaison par encliquetage entre le premier élément d'encliquetage (147) et le deuxième élément d'encliquetage (140) lors d'un déplacement de l'élément d'éjection (163) hors d'une position initiale vers une position de désencliquetage.

14. Tête de dosage selon la revendication 13, dans laquelle le deuxième engrenage est un mécanisme à leviers comportant deux leviers coudés (173), lesquels sont montés de façon pivotante sur le support, s'appliquent sur le côté supérieur de la plaque de pression (44) avec les extrémités d'un premier bras de levier (176) à une distance l'un de l'autre et sont accouplés à la plaque de butée (75) avec les extrémités d'un deuxième bras de levier (175) à une distance l'un de l'autre.

15. Tête de dosage selon la revendication 13 ou 14, dans laquelle le premier élément d'encliquetage est une crémaillère (147) faisant saillie vers le haut verticalement à partir de la plaque de butée (75) et le deuxième élément d'encliquetage est un cliquet (149) précontraint en direction de la crémaillère par un système à ressort et s'encliquetant vers le haut dans la crémaillère (147) lors d'un déplacement de la plaque de butée (75), dans laquelle le système d'encliquetage comporte de préférence au moins une transmission à coins, laquelle présente un premier élément de coin (150) incliné en angle aigu par rapport à la verticale sur le cliquet (149) et/ou un deuxième élément de coin (172) incliné en angle droit par rapport à la verticale sur l' élément d'éjection (163), dans laquelle l'élément d'éjection (163) est guidé sur le support de manière à pouvoir être déplacé dans la direction verticale sur des systèmes de guidage, de sorte qu'un déplacement de l'élément d'éjection (163) dans la direction verticale permet de mettre en prise l'élément d'éjection (163) et le cliquet (149) avec l'un au moins parmi le premier et le deuxième élément de coin (150, 172), moyennant quoi le cliquet (149) peut être levé hors de la denture de la crémaillère (147).

16. Tête de dosage selon l'une des revendications 13 à 15, dans laquelle une première partie d'éjection (160) comporte la plaque de butée (75) et deux crémaillères (147) faisant saillie vers le haut à partir de la plaque de butée, une deuxième partie d'éjection (162) sous la forme d'une traverse comporte deux éléments d'éjection (163) faisant saillie verticalement vers le bas à partir de la traverse, et comporte un élément d'actionnement faisant saillie verticalement vers le haut, et la première partie d'éjection (160) et la deuxième partie d'éjection (162) présentent des premiers et deuxièmes éléments de butée, lesquels se rencontrent après l'encliquetage des premier et deuxième éléments d'encliquetage, moyennant quoi la deuxième partie d'éjection (162) entraîne la première partie d'éjection (160) lors d'un déplacement supplémentaire vers le bas.

17. Tête de dosage selon l'une des revendications 1 à 16 avec des pointes de pipette (43), dans laquelle les appendices (42) sont insérés dans des pointes de pipette (43) et les pointes de pipette (43) sont bloquées sur les appendices (42) par des joints toriques (31, 37) élargis.

18. Dispositif de dosage comportant une tête de dosage (1) selon l'une des revendications 1 à 17.

19. Dispositif de dosage selon la revendication 18, lequel est une station de dosage ou un doseur automatique (111) ou un automate de laboratoire ou une pipette à canaux multiples.

20. Dispositif de dosage selon la revendication 19, comportant au moins l'un des systèmes ci-dessous :
• au moins un dispositif de maintien (117) avec une pluralité de pointes de pipette (43) maintenues dans celui-ci,
• au moins un récipient à échantillon (120) pour la mise à disposition d'échantillons liquides,
• au moins un récipient à réactif (118) pour la mise à disposition de réactifs,
• au moins un récipient à déchets (121) pour la réception de pointes de pipette (43) usagées.

21. Dispositif de dosage selon la revendication 19, dans lequel la tête de dosage (1) est maintenue sur un dispositif de transfert à trois axes (110), lequel est conçu pour déplacer la tête de dosage (1) le long de trois axes.

22. Procédé pour le dosage de liquides, dans lequel les liquides sont dosés au moyen d'une tête de dosage selon l'une des revendications là 16.

23. Procédé selon la revendication 22, dans lequel
• un groupe de pointes de pipette est mis à disposition dans un dispositif de maintien pour pointes de pipette,
• les manchons de la tête de dosage sont déplacés vers la position de libération,
• la tête de dosage dotée des appendices est introduite dans les extrémités supérieures des pointes de pipette mises à disposition, jusqu'à ce que les joints toriques plongent dans les pointes de pipette mises à disposition,
• les manchons sont mis dans la position de serrage et les pointes de pipette sont ainsi bloquées sur les appendices,
• la tête de dosage est relevée et les pointes de pipette bloquées sur celle-ci sont retirées du dispositif de maintien,
• des dosages sont effectués avec les pointes de pipette bloquées sur les appendices de la tête de dosage,
• les pointes de pipette sont libérées des appendices par déplacement des manchons hors de la position de serrage vers la position de libération.

24. Procédé selon la revendication 22 ou 23, dans lequel, avant la plongée des appendices dans les pointes de pipette, la plaque de butée est mise dans la position de butée et les appendices sont plongés dans les pointes de pipette, jusqu'à ce que les extrémités supérieures des pointes de pipette s'appliquent sur la plaque de butée, ensuite les pointes de pipette sont bloquées sur les appendices par déplacement des manchons hors de la position de libération vers la position de serrage et, après la réalisation des dosages, les pointes de pipette sont détachées des appendices par déplacement des manchons hors de la position de serrage vers la position de libération et par déplacement de la plaque de butée hors de la position de butée vers la position d'éjection.

25. Procédé selon l'une des revendications 22 à 24, dans lequel la tête de dosage est déplacée au-dessus d'un récipient à déchets avant l'éjection des pointes de pipette par rapport aux appendices et les pointes de pipette sont éjectées dans le récipient à déchets.
